(19) Europäisches Patentamt
European Patent Office
Office européen des brevets

(11) EP 1 175 663 B1

(12) **EUROPÄISCHE PATENTSCHRIFT**

(45) Veröffentlichungstag und Bekanntmachung des Hinweises auf die Patenterteilung:
**05.03.2003 Patentblatt 2003/10**

(21) Anmeldenummer: **00920680.6**

(22) Anmeldetag: **10.04.2000**

(51) Int Cl.[7]: **G06T 15/50**

(86) Internationale Anmeldenummer:
**PCT/EP00/03175**

(87) Internationale Veröffentlichungsnummer:
**WO 00/063846 (26.10.2000 Gazette 2000/43)**

(54) **VERFAHREN ZUR RASTERISIERUNG EINES GRAPHIKGRUNDELEMENTS**

METHOD OF RASTERIZING A GRAPHICS BASIC COMPONENT

PROCEDE DE CONVERSION D'UN ELEMENT DE BASE GRAPHIQUE EN UNE SERIE DE POINTS

(84) Benannte Vertragsstaaten:
**DE FR GB IE**

(30) Priorität: **15.04.1999 DE 19917092**

(43) Veröffentlichungstag der Anmeldung:
**30.01.2002 Patentblatt 2002/05**

(60) Teilanmeldung:
**02006927.4 / 1 227 444**

(73) Patentinhaber: **SP3D Chip Design GmbH
82319 Starnberg (DE)**

(72) Erfinder: **FURTNER, Wolfgang
D-82256 Fürstenfeldbruck (DE)**

(74) Vertreter: **Schoppe, Fritz, Dipl.-Ing.
Patentanwälte Schoppe, Zimmermann, Stöckeler & Zinkler,
Postfach 71 08 67
81458 München (DE)**

(56) Entgegenhaltungen:
**GB-A- 2 297 018**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 175 663 B1

Printed by Jouve, 75001 PARIS (FR)

## Beschreibung

Die vorliegende Erfindung bezieht sich auf ein Verfahren zur Rasterisierung eines Graphikgrundelements, um insbesondere auf ein beschleunigtes Verfahren zur Rasterisierung eines Graphikgrundelements in einem Graphiksystem, um ausgehend von Graphikgrundelement-Beschreibungsdaten Pixeldaten für das Graphikgrundelement zu erzeugen.

Um den Prozeß der Bildaufbereitung (Rendering) von dreidimensionalen Bildern zu beschleunigen, ist es bekannt, Mehrfach-Prozessoren oder Hardware-Pipelines parallel zu verwenden. Jede dieser Einheiten wirkt auf eine Teilmenge der Informationen ein, die in einem gesamten Bild enthalten ist, wie dies von James D. Foley u.a. in "Computergraphic Principles and Practice", 2. Ausgabe, 1990, Seiten 887-902 beschrieben ist. Diese Aufgabe kann dadurch aufgeteilt werden, daß entweder Objekte (Polygone) in dem Bild parallel verarbeitet werden, oder daß bestimmte Abschnitte des Bildes parallel verarbeitet werden. Eine reine Implementierung der Aufteilung von Objekten führt zu einer Unterteilung der Objektebenenbeschreibung einer Szene (Scheitelpunktuste; Vertex List), so daß jeder der Prozessoren gleichmäßig belastet wird. Diese Aufteilung wird unabhängig von der Anordnung der jeweiligen Objekte in der dreidimensionalen Welt oder in einem Rahmenpuffer durchgeführt.

Die Implementierung der Aufteilung der Aufgabe durch Bilden von Abschnitten eines Bildes erfolgt durch Unterteilen eines Rahmenpuffers in Teilabschnitte, die normalerweise die gleiche Größe haben. Hinsichtlich der Aufteilung des Rahmenpuffers besteht die Möglichkeit, demselben entweder große, kontinuierliche Pixelblöcke zuzuordnen, oder die Zuordnung in einer verschachtelten Art und Weise vorzunehmen.

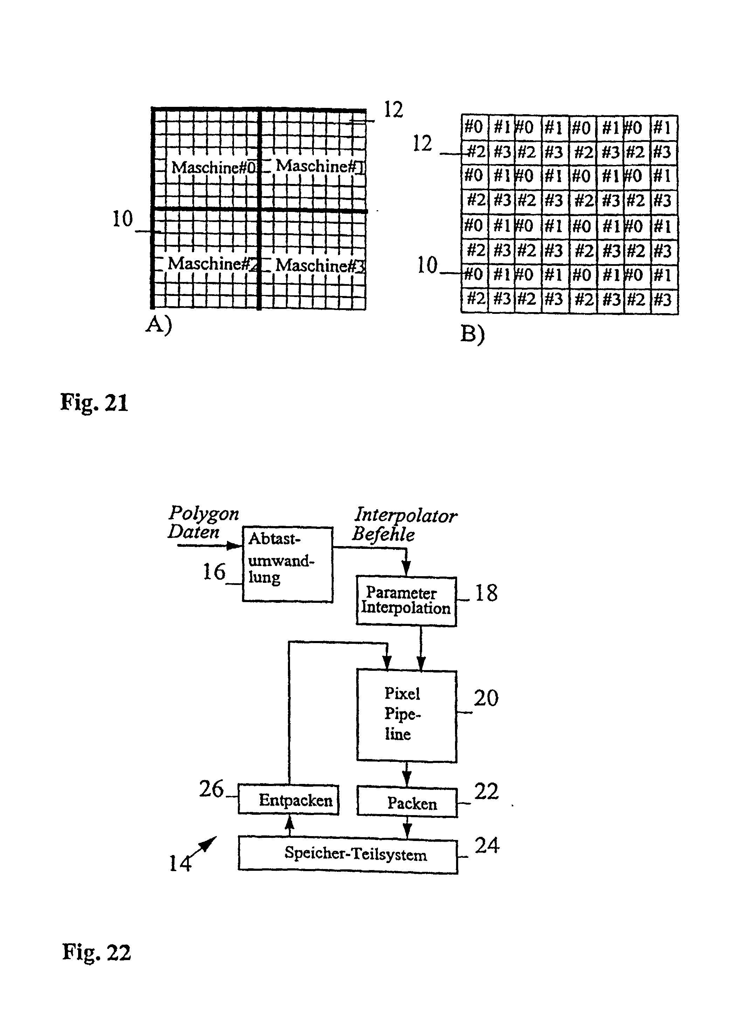

In Fig. 21 sind die gerade beschriebenen Partitionierungsmöglichkeiten eines Rahmenpuffers für den Fall eines Graphiksystems dargestellt, welches mit vier Graphikbearbeitungsmaschinen (Engines) arbeitet. In Fig. 21a ist die Zuordnung von großen, kontinuierlichen Pixelblöcken zu den jeweiligen Graphikverarbeitungsmaschinen dargestellt. Wie zu erkennen ist, ist der Rahmenpuffer 10 in diesem Beispielsfall in vier gleichgroße Blöcke unterteilt, die den Maschinen zugeordnet sind. In Fig. 21b ist die verschachtelte Rahmenpartitionierung des Rahmenpuffers 10 dargestellt, und es ist zu erkennen, daß die Verarbeitung der einzelnen Pixel 12, die durch die Kästchen in der Fig. 21 dargestellt sind, auf verschachtelte Art und Weise durch die vier Graphikverarbeitungsmaschinen des Graphiksystems erfolgt.

Die verschachtelte Partitionierung (Interleaved Partitioning) wird sehr häufig verwendet, da diese den Vorteil bietet, daß die Arbeitsbelastung der einzelnen Prozessoren automatisch ausgeglichen wird. Mit Ausnahme der kleinsten Polygone liegen sämtliche Polygone in allen Partitionierungen des Rahmens, so daß fast jeder Bildaufbereitungsvorrichtung (Renderer) die gleiche Anzahl von Pixeln zugeführt werden. Die verschachtelte Rahmenpufferpartitionierung wird auch als "verteilter Rahmenpuffer" bezeichnet.

In Fig. 22 ist ein Blockdiagramm eines herkömmlichen Graphiksystems gezeigt, welches eine Pipeline zur Pixelverarbeitung aufweist. Das Graphiksystem ist in seiner Gesamtheit mit dem Bezugszeichen 14 versehen und umfaßt einen Abtastumwandler 16 (Scan Converter) der an seinem Eingang Daten empfängt, welche das zu verarbeitende Graphikgrundelement, z. B. ein Polygon, beschreiben. Der Abtastumwandler 16 bearbeitet die empfangenen Daten und erzeugt an seinem Ausgang Interpolatorbefehle, die in einen Parameterinterpolator 18 eingegeben werden. Der Ausgang des Parameterinterpolators 18 ist mit einem ersten Eingang einer Pixelpipeline 20 verbunden. Der Ausgang der Pixelpipeline 20 ist über eine Packungseinheit 22 mit einem Speicherteilsystem 24 verbunden. Über eine Entpackungseinheit 26 werden Daten aus dem Speicherteilsystem 24 dem zweiten Eingang der Pixelpipeline 20 zugeführt.

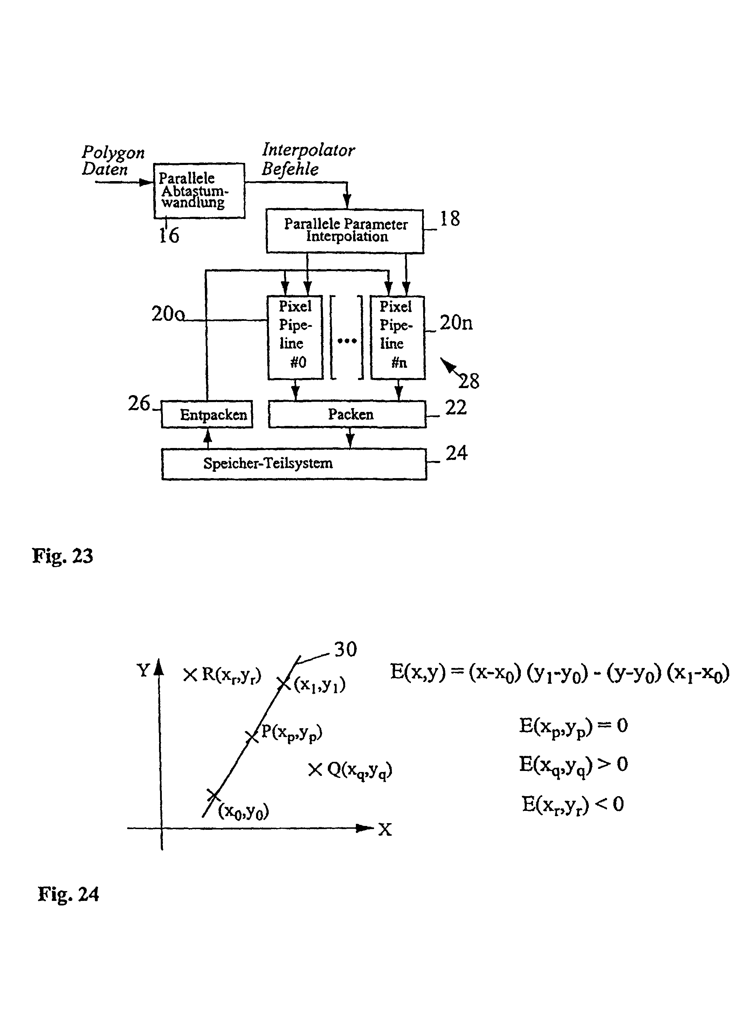

In Fig. 23 ist ein Blockdiagramm eines herkömmlichen Graphiksystems mit einer Mehrzahl von parallel arbeitenden Pipelines dargestellt. Das Graphiksystem ist in seiner Gesamtheit mit dem Bezugszeichen 28 verbunden, und gleiche oder ähnliche Elemente, wie bei dem System in Fig. 22, sind mit den gleichen Bezugszeichen versehen. In Abweichung von dem in Fig. 22 dargestellten Graphiksystem ist der Abtastumwandler 16 als paralleler Abtastumwandler ausgeführt, und ebenso ist der Parameterinterpolator 18 als paralleler Parameterinterpolator ausgeführt. Dieser parallele Parameterinterpolator 18 weist eine Mehrzahl von Ausgängen auf, um Daten einer Mehrzahl von Pixel-Pipelines $20_0$-$20_n$ zuzuführen, wobei Ausgänge der Pixel-Pipelines mit der Packungseinheit 22 verbunden sind. Die Entpackungseinheit 26 ist mit den zweiten Eingängen der jeweiligen Pixelpipeline $20_0$-$20_n$ verbunden.

Die parallele Bildaufbereitung unter Verwendung einer verschachtelten Rahmenpartitionierung stellt für die Hardwareimplementierung von Bildaufbereitungspipelines, wie sie in Fig. 23 gezeigt sind, ein sehr geeignetes Verfahren dar. Das Speicherteilsystem 24 handhabt in der Regel sogenannte Speicherwörter, die eine Mehrzahl von Pixeln enthalten. Ein 128 Bitwort enthält z. B. vier Farbpixel (true color pixel), wobei jedes Pixel 32 Bit umfaßt. Das Speicherteilsystem 24 kann während eines Taktzyklus entweder ein solches Wort lesen oder schreiben. Bei einem Graphiksystem mit einer einzelnen Pixelpipeline, wie es in Fig. 22 gezeigt ist, muß die Entpackungseinheit 26 zur Fragmentberechnung (z.B. Texturüberblendungen, spiegelnden Hinzufügungen, Zielüberblendungen, Dithering, Rasteroperationen u.ä.) ein Pixel pro Takt herausziehen und in das interne Farbformat umwandeln. Die Packungseinheit 22 wandelt die Ergebnisse der Pixel-Pipelineberechnung in das im Speicher gespeicherte Farbformat um und stellt mehrere Pixel zu einem Speicherwort zusammen.

Systeme mit mehreren Bildaufbereitungspipelines, wie sie in Fig. 23 gezeigt sind, können mehrere Pixel, die innerhalb eines Speicherwortes enthalten sind, parallel verarbeiten. Wenn die Anzahl der Pixelpipeline gleich der Anzahl von Pixel pro Speicherwort ist, wird das Packen und Entpacken derselben trivial.

In Graphikverarbeitungssystemen werden meistens Bildaufbereitungsmaschinen verwendet, deren Grundelemente Polygone sind. Überdies sind diese Polygone auf bestimmte Typen, wie z. B. Dreiecke oder vierseitige Elemente beschränkt. Komplexere Polygone können dann unter Verwendung dieser Graphikgrundelemente definiert werden.

Die grundsätzliche Herausforderung bei der Verarbeitung von Graphikgrundelementen besteht darin, daß es so einfach wie möglich sein muß, zu bestimmen, ob ein Punkt auf einem Bildschirmbereich innerhalb oder außerhalb des aufzubereitenden Graphikgrundelements liegt. Für Dreiecke kann dies beispielsweise dadurch erreicht werden, daß die drei Kanten, die das Graphikgrundelement bilden, mittels linearer Kantenfunktionen beschrieben werden.

In Fig. 24 ist ein Beispiel für eine lineare Kantenfunktion dargestellt. Beispielhaft ist in dem karthesischen Koordinatensystem in Fig. 24 eine Kante 30 eines Graphikgrundelements dargestellt, und mit den Koordinaten $x_0$ und $y_0$ bzw. $x_1$ und $y_1$, sind der Anfangs- bzw. Endpunkt der Kante bestimmt.

Durch die im rechten Abschnitt der Fig. 24 angegebene Kantenfunktion kann bestimmt werden, ob ein Punkt innerhalb des karthesischen Koordinatensystems links oder rechts der Kante oder auf der Kante liegt. Der Punkt P liegt auf der Kante 30 und in diesem Fall ist der Wert für die Kantenfunktion gleich 0. Der Punkt Q liegt rechts von der Kante 30, und in diesem Fall ist das Ergebnis der Kantenfunktion größer als 0, wohingegen für den Punkt R, welcher links von der Kante 30 liegt, daß Ergebnis der Kantenfunktion kleiner ist als 0. Mit anderen Worten ergibt jede der linearen Kantenfunktionen einen Wert von 0 für Koordinaten, die sich genau auf der Kante bzw. der Linie befinden, einen positiven Wert für Koordinaten auf einer Seite der Linie bzw. Kante, und einen negativen Wert für Koordinaten auf der anderen Seite der Linie bzw. Kante. Das Vorzeichen der linearen Kantenfunktion unterteilt die Zeichenoberfläche in zwei Halbebenen.

Die linearen Kantenfunktionen (Linear Edge Functions) sind in den folgenden Artikeln näher beschrieben: J. Pineda "A Parallel Algorithm for Polygon Rasterisation" Siggraph Proceedings, Band 22, Nr. 4, 1988, Seiten 17-20; H. Fuchs, o.a. "Fast Spheres Shadows, Textures, Transparences, and Image Enhancements in Pixel-Planes" Seggraph Proceedings, Band 19, Nr. 3, 1985, Seiten 111-120; Dunnet, White, Lister, Grinsdale University of Sussex, "The Image Chip for High Performance", IEEE Computer Graphics and Applications, Nov. 1992, Seiten 41-51.

Durch die Multiplikation der Kantenfunktionen mit dem Wert -1 kann das Vorzeichen für die Halbebenen invertiert werden, und ferner kann die Kantenfunktion normalisiert werden, um eine Entfernung eines Punktes zu der Kante anzuzeigen, wie dies von A. Schilling in "A New, Simple and Efficient Antialiasing with Subpixel Marks", Siggraph Proceedings, Band 25, Nr. 4, 1991, Seiten 1, 2, 3 - 141 beschrieben wird. Dies ist besonders für Pixelüberdeckungsberechnungen sinnvoll, um ein Kanten-Antialiasing durchzuführen (Antialiasing = Maßnahme zur Minderung von Bildverzerrungen).

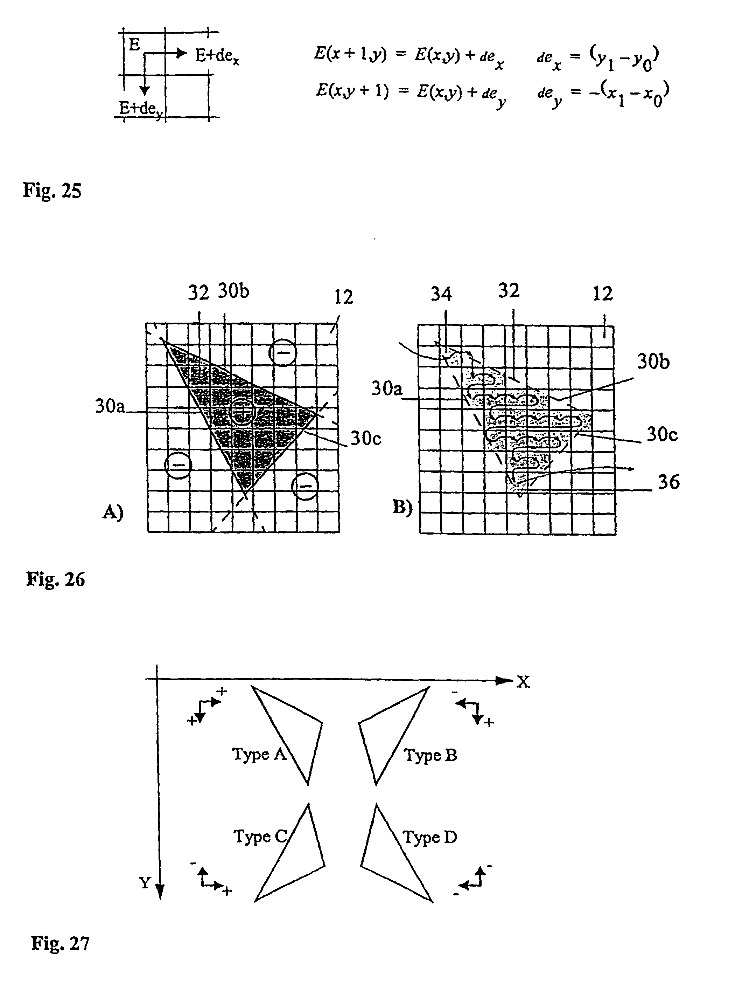

Die linearen Kantenfunktionen werden von einem gegebenen Startpunkt aus inkremental berechnet, was für Hardwareimplementierungen besonders wünschenswert ist, nachdem es die Möglichkeit eröffnet, anstelle der aufwendigen Multiplizierer nur einfache Addierer zu verwenden. In Fig. 25 ist ein Beispiel für die Kantenfunktionsinkremente dargestellt, wobei mit E der Startpunkt bezeichnet ist, und $E+de_x$ die Inkrementierung in die x-Richtung anzeigt, und $E+de_y$ die Inkrementierung in die y-Richtung. Im rechten Teil der Fig. 25 ist die Bestimmung der Inkrementalwerte $de_x$ bzw. $de_y$ beschrieben. Ist die Kantenfunktion selbst normalisiert oder invertiert, ist es erforderlich, die in Fig. 25 angegebenen Delta-Werte für die inkrementalen Schritte ebenfalls zu normalisieren und zu invertieren.

Für ein Dreieck können die drei Kantenfunktionen so angeordnet werden, daß alle drei Kantenfunktionen nur für solche Koordinaten einen positiven Wert liefern, die innerhalb des Dreiecks liegen. Wenn zumindest eine Kantenfunktion einen negativen Wert ergibt, liegt die betreffende Koordinate, d.h. daß betreffende Pixel, außerhalb des Dreiecks. In Fig. 26A ist die Vorzeichenverteilung für die drei Kanten 30a, 30b, 30c eines dreieckförmigen Graphikgrundelements 32 dargestellt. Die in Fig. 26 dargestellten Kästchen 12 stellen jeweils ein darstellbares Pixel dar. Wie zu erkennen ist, ergeben die Kantenfunktionen für die Kanten 30a-30d immer dann einen negativen Wert, wenn die Koordinate außerhalb des Graphikgrundelements 32 liegt und nur wenn die Koordinate innerhalb desselben liegt, wird ein Ergebnis mit positivem Vorzeichen ausgegeben.

Typischerweise erhält die Abtastumwandlungshardware (Scan Conversion Hardware) die Kantenfunktionswerte aller drei Kanten für einen gegebenen Startpunkt zusammen mit den Delta-Werten für die x- und y-Richtung, um so die inkrementale Berechnung der nachfolgenden Koordinaten zu ermöglichen. Bei jedem Takt rückt der Abtastumwandler um ein Pixel in horizontaler Richtung oder ein Pixel in vertikaler Richtung weiter. In Fig. 26B ist ein möglicher Überquerungsalgorithmus dargestellt, um das in Fig. 26A bereits dargestellte Dreieck 32 zu durchlaufen. Der Abtastpfad ist in Fig. 26B dargestellt, und wie zu erkennen ist, wird das Dreieck beginnend mit einem Startpixel 34 auf die dargestellte Weise durchlaufen, bis zum letzten Pixel 36. Von hieraus springt der Algorithmus zu einem weiteren, zu verarbeitenden Graphikgrundelement. Beim Überqueren des Graphikgrundelementes können Kantenfunktionswerte für ältere Positionen gespeichert werden, um eine Rückkehr zu dem selben oder zu deren Nachbarn zu ermöglichen. Das Ziel besteht darin, so wenig Taktzyklen pro Dreieck wie möglich zu verbrauchen, oder, mit anderen Worten, das Abtasten von Pixeln außerhalb des Dreiecks, welche in weiterem Verlauf der Beschreibung als unsichtbare Pixel bezeichnet werden, zu vermeiden. Ein einfaches Verfahren könnte z. B. darin bestehen, alle Pixel, die innerhalb des Umgrenzungsrechteckes des Graphikgrundelements enthalten sind, zu überqueren, und diese hinsichtlich ihrer Sichtbarkeit zu überprüfen. Dies würde offensichtlich bedeuten, daß mindestens 50% von nicht-sichtbaren Pixeln überquert werden müßten. Dem gegenüber ist der in Fig. 26B dargestellte Algorithmus weiterentwikkelt, nachdem dieser das Dreieck Abtastlinie für Abtastlinie abgetastet, wobei hierbei einer führenden Kante des Dreiecks gefolgt wird. Die führende Kante des Dreiecks ist diejenige, die die größte Ausdehnung in eine Richtung senkrecht zur Abtastrichtung bzw. zur Abtastlinie hat. Bei den meisten Dreiecksformen wird hierdurch das Überqueren von unsichtbaren Pixeln in großem Umfang vermieden, und nur für sehr schmale Dreiecke steigt der Prozentsatz von abgetasteten unsichtbaren Pixeln an.

Die Abtastlinien können entweder horizontal oder vertikal oder sogar mit sich ändernden Ausrichtungen abhängig von dem zu untersuchenden Dreieck definiert werden. In der Praxis ist es sinnvoll, die Abtastumwandlung auf horizontale Abtastlinien zu beschränken, da dies die Abtastung mit der Anzeige-Auffrisch-Abtastung ausrichtet und ferner kann ein Speicherzugriff typischerweise nur für eine Abtastachse optimiert werden. Wenn die Abtastzeilen horizontal definiert sind, ist die führende Kante des Dreiecks durch die zwei Scheitelpunkte definiert, die den größten Unterschied bzgl. ihrer y-Koordinaten aufweisen. Um ein symmetrisches Verhalten der Rasterisierung bzw. Abtastumwandlung sicher zu stellen, ist es wünschenswert, die vertikale bzw. horizontale Abtastrichtung abhängig von der Neigung der führenden Kante und abhängig von der Ausrichtung des Dreiecks zu verändern. In Fig. 27 sind verschiedene Abtastrichtungen für unterschiedliche Dreieckstypen dargestellt. Wie zu erkennen ist, ist für das Dreieck des Typ A die horizontale Abtastrichtung in positiver x-Richtung und die vertikale Abtastrichtung in positiver y-Richtung definiert. Für das Dreieck vom Typ B ist die horizontale Abtastrichtung in negativer x-Richtung und die vertikale Abtastrichtung in positiver y-Richtung definiert. Für das Dreieck vom Typ C ist die horizontale Abtastrichtung in positiver x-Richtung und die vertikale Abtastrichtung in negativer y-Richtung definiert, und für das Dreieck vom Typ D ist die vertikale Abtastrichtung in negativer y-Richtung und die horizontale Abtastrichtung in negativer x-Richtung definiert.

Nachfolgend wird noch auf das Speicherteilsystem, welches anhand der Fig. 22 und 23 erwähnt wurde, näher eingegangen. Bekannte Graphiksysteme verwenden typischerweise dynamische Speicher mit wahlfreiem Zugriff (z. B. synchrone DRAMs), für die Rahmenpufferspeicherung. Nachdem das Verhalten des Rasterisierers durch die Speicherbandbreite bestimmt ist, ist es wünschenswert, mit dem Speicher auf effiziente Art und Weise zu kommunizieren.

Große Rahmenpuffer (z.B. 1600 x 1280 x 32 Bit - 8M Bit) können in einer nur geringen Anzahl von Speicherbauelementen aufgenommen werden. Um eine ausreichende Bandbreite sicherzustellen, wird auf den Speicher über einen breiten Weg zugegriffen, und dieser ist nur durch die Anzahl der Ein-/Ausgänge (I/Os) begrenzt, die an der Verbindung zwischen Graphikchip und Speicher vorhanden sind (z. B. 128 Datenbits). Unter Verwendung moderner Technologien, wie z.B. der doppelten Datenratenübertragung, können Rahmenpuffer mit Bandbreiten von größer als 2 GByte/sek pro Graphiksteuerung erreicht werden. Diese Bandbreite ist jedoch nicht für den vollständig wahlfreien Zugriff verfügbar.

Ein DRAM-Array besteht aus Zeilen und Spalten, und der Zugriff innerhalb einer Zeile (Seite) auf wechselnde Spalten wird normalerweise sehr schnell sein. Synchrone DRAMs können Daten in jedem Taktzyklus übertragen, sofern sie in der gleichen Zeile bleiben. Der Übergang auf eine andere Zeile bedeutet den Verbrauch von mehreren Taktzyklen, um die alte Spalte zu schließen, und die neue zu öffnen.

Diese Zyklen können nicht für die tatsächliche Datenübertragung verwertet werden, so daß sich die Gesamtbandbreite reduziert. Um diesen Effekt zu minimieren, enthalten moderne DRAMs einige, 2 bis 4, Speicherbänke, die unterschiedliche Zeilen offen haben können. Ein effizientes Bildaufbereitungssystem muß diese Eigenschaften berücksichtigen, um ein optimales Verhalten an den Tag zu legen.

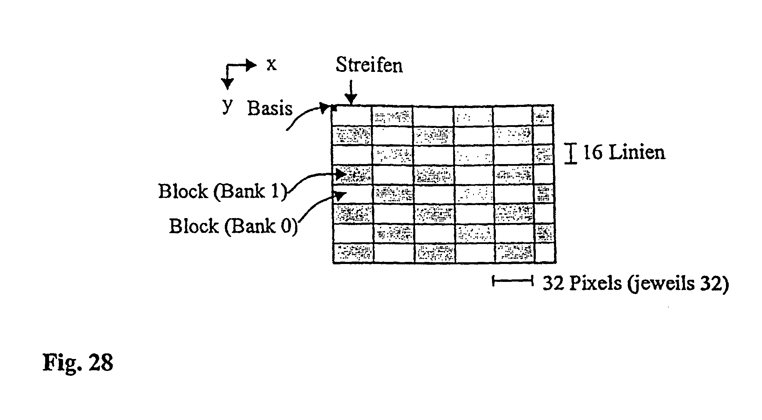

Eine bekannte Technik bei Speichern wird als "Memory Tiling" bezeichnet, also die Unterteilung des Speichers in Kacheln bzw. Blöcke. In diesem Fall sind rechteckförmige Bereiche eines Abbildungsbildschirms auf Blöcke (tiles) in dem Speicher abgebildet. Kleine Dreiecke tendieren dazu, vollständig in einen Block zu fallen, was bedeutet, daß diese während der Bildaufbereitung zu keinen Seitenfehlern beim Zugriff auf den Speicher führen. Die Graphiksystemeigenschaften für die Verarbeitung von Dreiecken, die mehrere Blöcke schneiden, d. h. sich über mehrere Blöcke erstrecken, kann dadurch erhöht werden, daß benachbarte Blöcke in unterschiedliche Speicherbänke in Form eines Schachbretts abgebildet werden. Ein Beispiel für eine mögliche Speichereinteilung ist in Fig. 28 gezeigt, bei der jeder Block eine Größe von 2 KByte hat.

Aus der US-A-5,367,632 ist ein Graphiksystem mit einer Mehrzahl von pipelineartig angeordneten Graphikaufbereitungselementen bekannt, wobei jeder Pipeline eine Rasterisierung mit entsprechendem Speicher zugeordnet ist. Die einzelnen Speicher sind herkömmliche Speicherelemente, die jeweils für sich genommen einen Rahmenpuffer für die jeweilige Pipeline bilden. Die Speicher sind in keiner spezifischen Organisation angeordnet.

Die US-A-5,821,944 beschreibt das "Memory Tiling", bei dem ein Bildschirmbereich, auf dem ein Graphikgrundelement abzubilden ist, ist in eine Vielzahl von Feldern oder Blöcken unterteilt. Nach Festlegung der Blöcke erfolgt eine zweistufige Abtastung und es wird festgestellt, welche der Blöcke einen Abschnitt des zu bearbeitenden Graphikgrundelements aufweisen. Dann werden in der zweiten Stufe die gerade bestimmten Blöcke abgetastet. Die einzelnen Blöcke sind ausgewählt, um entsprechenden Speicherbereichen zugeordnet zu sein, wobei die den jeweiligen Blöcken zugeordneten Speicherbereiche während der Bearbeitung in einen Cache-Speicher abgelegt werden.

Die aus dem Stand der Technik bekannten Graphiksysteme zur Verarbeitung von dreidimensionalen Bildern sind jedoch dahingehend nachteilhaft, daß keine optimale Ausnutzung der Speicherkapazitäten sichergestellt ist. Daher und durch die aus dem Stand der Technik bekannten Rasterisierungs-Verfahren ist die Leistungsfähigkeit dieser Systeme beschränkt.

Ausgehend von diesem Stand der Technik liegt der vorliegenden Erfindung die Aufgabe zugrunde, ein Verfahren zur Rasterisierung eines Graphikgrundelements zu schaffen, das gegenüber den im Stand der Technik bekannten Verfahren eine erhöhte Leistungsfähigkeit aufweist.

Diese Aufgabe wird durch ein Verfahren gemäß Anspruch 1, gelöst.

Die vorliegende Erfindung Schafft ein Verfahren zur Rasterisierung eines Graphikgrundelements in einem Graphiksystem, um ausgehend von Graphikgrundelement-Beschreibungsdaten Pixeldaten für das Graphikgrundelement zu erzeugen, wobei das Graphiksystem einen Speicher aufweist, der in eine Mehrzahl von Blöcken unterteilt ist, die jeweils einem vorbestimmten einer Mehrzahl von Bereichen auf einem Abbildungsbildschirm zugeordnet sind. In einem ersten Schritt werden die dem Graphikgrundelement zugeordneten Pixel in einem der Mehrzahl von Blöcken abgetastet, in den sich das Graphikgrundelement erstreckt, und dieser Schritt wird wiederholt, bis alle dem Graphikgrundelement zugeordneten Pixel in jedem der Mehrzahl von Blöcken, in den sich das Graphikgrundelement erstreckt, abgetastet sind. Anschließend werden die erhaltenen Pixeldaten zur weiteren Verarbeitung ausgegeben.

Der vorliegenden Erfindung liegt die Erkenntnis zugrunde, daß die Leistungsfähigkeit von Graphikverarbeitungssystemen dadurch erhöht werden kann, daß zum einen die abzutastenden Graphikgrundelemente auf "intelligente" Art und Weise überquert werden, und/oder daß zum anderen die Leistungsfähigkeit des Systems durch eine weitere Parallelisierung der Datenverarbeitung erhöht wird.

Gemäß der vorliegenden Erfindung wird ein Verfahren gelehrt, welches einen "monolitischen Algorithmus" implementiert, bei dem sämtliche der oben ausgeführten Aspekte gemeinsam, einzeln oder in beliebiger Kombination verwendet werden können, um so die Leistungsfähigkeit des Systems zu erhöhen. Hierdurch ergibt sich eine "skalierbare Architektur" der zu verwendenden Graphikverarbeitungseinrichtung.

Mehrere Bildaufbereitungspipelines werden auf einem einzelnen Chip derart unterstützt, daß jede derselben ein anderes Pixel eines Speicherwortes verarbeitet. Dies erfordert, daß der parallele Abtastumwandler in einem Betriebsmodus, der als verriegelte Abtastung (locked scan) bezeichnet wird, arbeitet. Dies bedeutet, daß die parallel verarbeiteten Pixel immer eine feste geometrische Beziehung zueinander haben (pixel cluster). Dies vereinfacht die Hardwareimplementierung bezüglich des Speicherteilsystems. Ferner wird hierdurch unabhängig vom Chiplayout auch die Anwendung des Verfahrens auf Chips mit mehreren Bildaufbereitungspipelines ermöglicht.

Ein weiterer Vorteil des Verfahrens besteht darin, daß es möglich ist, mehrere einzelne Chips (s. o.) in einem System zu kombinieren, um die Leistungsfähigkeit desselben mit jedem hinzugefügten Chip zu erhöhen. Überdies können unterschiedliche Chips in dem System unterschiedlichen Aufgaben dienen und eine unterschiedliche Anzahl von Pixeln parallel verarbeiten, d. h. Cluster mit unterschiedlicher Größe. In diesem Fall ist es nicht erforderlich, daß die Abtastumwandler der parallelen Bildaufbereitungschips in dem System miteinander verriegelt sind, da jeder derselben einen privaten Rahmenpufferspeicher hat, und die Zuführung der Polygondaten kann unter Verwendung von FIFOs entkoppelt werden.

Ein weiterer Vorteil der vorliegenden Erfindung besteht in der Speicherausnutzung. Die Speicherausnutzung hängt hauptsächlich von der Effizienz der Speichersteuerung und der Speicherentscheidungsschaltung (Arbitration-Schaltung) ab. Aber sogar mit einer idealen Speicherschnittstelleneinheit kann die Wahlfreiheit der Pixelzugriffe insbesondere bei Abtastung kleiner Dreiecke die Speicherausnutzung ruinieren, wobei dieser Effekt bei der parallelen Bildaufbereitung, bei der Dreiecke in kleinere Abschnitte unterteilt sind, sogar weiter verschlimmert wird. Dieses Problem wird gemäß der vorliegenden Erfindung vermieden, da dieser die Erkenntnis zugrunde liegt, daß für den Fall, daß der Abtastumwandler Kenntnis bezüglich der Abbildung der Bildschirmbereiche auf den Speicheradressbereich hat (tiling), die Anzahl von Seitenfehlern pro Dreieck minimiert werden kann. Ferner kann auch die durchschnittliche Anzahl von gleichzeitig offenen Speicherbänkenreduziert werden, was wiederum die möglichen Kollisionen in Systemen reduziert, in denen mehrere Anfragen (Textur-Leseoperation, Graphikaufbereitungsmaschine-Lese/Schreib-Operation, Anzeigebildschirm-Leseoperation) auf ein gemeinsam verwendetes Speicherelement (verbundener Speicher) erfolgt.

Ein weiterer Vorteil der vorliegenden Erfindung besteht darin, daß durch das erfindungsgemäße Verfahren die Effizienz der Cache-Speicherung von Texturdaten verbessert werden kann. Typischerweise wird für die Texturabbildung eine bilineare oder trilineare Filterung verwendet. Ohne eine Zwischenspeicherung der Texturdaten werden vier (bilineare Filterung) oder sogar acht (trilineare Filterung) ungefilterte Texel erforderlich, die von dem Speicherteilsystem pro Pixel bereitgestellt werden müßten. Ein Textur-Cache-Speicher kann sich die Tatsache zunutze machen, daß während des Durchlaufens einer Abtastlinie benachbarte Texel erneut verwendet werden können. Der Umfang der erneuten Verwendung hängt stark von der Vergrößerung/Verkleinerung ab, die ausgewählt wurde, und ist signifikant, wenn eine geeignete MIP-Tabellenebene (MIP-map level) ausgewählt ist. Innerhalb einer Abtastlinie ist nur ein sehr kleiner Textur-Cache-Speicher erforderlich, um diesen Vorteil zu nutzen. Um jedoch die benachbarten Texel einer vorhergehenden Abtastlinie erneut zu verwenden, muß in dem Textur-Cache-Speicher eine vollständige Abtastlinie der Texel enthalten sein. In der Praxis wird eine Cache-Speichergröße ausgewählt sein, die fähig ist, Abtastzeilen für Dreiecke bzw. Graphikgrundelemente von durchschnittlicher Größe zu speichern, wodurch die Effizienz für größere Dreiecke etwas abfällt. In diesem Zusammenhang besteht ein weiterer Vorteil der vorliegenden Erfindung darin, daß eine maximale Länge einer Abtastlinie durch den Abtastumwandler garantiert werden kann, so daß der Cache-Speicher genau dimensioniert werden kann, und normalerweise erheblich kleiner ist als derjenige, der erforderlich ist, um Abtastzeilen für Durchschnittsdreiecke zu speichern.

Bevorzugte Weiterbildungen der vorliegenden Erfindung sind in den Unteransprüchen definiert.

Nachfolgend werden bevorzugte Ausführungsbeispiele der vorliegenden Erfindung anhand der beiliegenden Zeichnungen näher erläutert. Es zeigen:

Fig. 1 eine schematische Darstellung eines Graphiksystems;

Fig. 2 eine Darstellung des erfindungsgemäßen Rasterisierungsverfahrens gemäß einem ersten Ausführungsbeispiel;

Fig. 3 eine Darstellung des erfindungsgemäßen Rasterisierungsverfahrens gemäß einem zweiten Ausführungsbeispiel;

Fig. 4 eine Darstellung des erfindungsgemäßen Rasterisierungsverfahrens gemäß einem dritten Ausführungsbeispiel;

Fig. 5 eine Tabelle, die Abmessungen für verschiedene Cluster zeigt, die gemäß dem dritten Ausführungsbeispiel verwendet werden können;

Fig. 6A und 6B eine Darstellung des erfindungsgemäßen Rasterisierungsverfahrens gemäß einem vierten Ausführungsbeispiel;

Fig. 7 ein Beispiel für ein Verschachtelungsschema in einem Graphiksystem gemäß Fig. 1;

Fig. 8 ein Blockdiagramm eines parallelen Abtastumwandlers;

Fig. 9 eine Darstellung der aktiven Zeilen/Spalten bei der Darstellung eines Graphikgrundelements;

Fig. 10 eine Darstellung der Bestimmung eines führenden Pixels in einem Cluster;

Fig. 11 eine Tabelle zur Bestimmung der Clusterkorrekturfaktoren;

Fig. 12 eine Tabelle zur Bestimmung der Verschachtelungskorrekturf aktoren;

Fig. 13 eine Tabelle zur Bestimmung der Startwertkorrekturwerte;

Fig. 14 ein Blockdiagramm eines Kanteninterpolators für eine führende Kante;

Fig. 15 eine Darstellung der Bestimmung des Überschreitens einer Kante eines Graphikgrundelements;

Fig. 16 eine Tabelle, die die Ergebnisse der Bestimmung aus Fig. 15 zeigt;

Fig. 17 eine Tabelle, die die Bewegungsschritte des Abtastumwandlers zeigt;

Fig. 18 eine Tabelle, die die Aktualisierungsregeln für die Aktualisierung der Interpolatorregister in Fig. 14 zeigt;

Fig. 19 eine Tabelle der Abtastbefehle;

Fig. 20A ein Beispiel für eine Sichtbarkeitsberechnung;

| | |
|---|---|
| Fig. 20B | Zeilen und Spalten bei der Sichtbarkeitsberechnung; |
| Fig. 21A | ein Beispiel für eine herkömmliche kontinuierliche Rahmenpartitionierung eines Rahmenpuffers; |
| Fig. 21B | ein Beispiel für eine herkömmliche verschachtelte Rahmenpartitionierung eines Rahmenpuffers; |
| Fig. 22 | ein Blockdiagramm eines Graphiksystems mit einer Pipeline; |
| Fig. 23 | ein Blockdiagramm eines Graphiksystems mit parallelen Pipelines; |
| Fig. 24 | ein Beispiel für eine lineare Kantenfunktion; |
| Fig. 25 | ein Beispiel für die Berechnung der Kantenfunktion; |
| Fig. 26A | eine Darstellung der Vorzeichen der Kantenfunktionswerte für ein Dreieck; |
| Fig. 26B | einen möglichen Überquerungsalgorithmus für das Dreieck aus Fig. 26 A; |
| Fig. 27 | eine Darstellung der Abtastrichtungen für unterschiedliche Dreiecke; und |
| Fig. 28 | ein Beispiel für einen Speicher, der in Blöcke gleicher Größe unterteilt ist. |

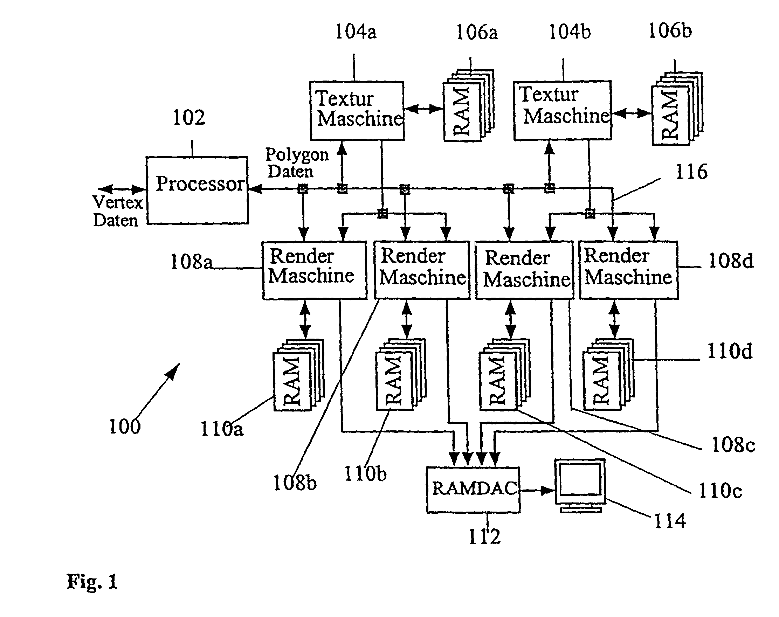

Anhand der Fig. 1 wird nachfolgend ein Beispiel eines Graphiksystems beschrieben, in welchem das erfindungsgemäße Verfahren ausgeführt wird. Das Graphiksystem in Fig. 1 ist in seiner Gesamtheit mit dem Bezugszeichen 100 versehen und umfaßt einen Einstellprozessor 102, der von einem übergeordneten System eine Beschreibung der darzustellenden Objekte, z.B. in Form einer Scheitelpunktliste empfängt. Der Prozessor 102 wandelt diese Beschreibung in individuelle Datensätze für jedes Graphikgrundelement bzw. Polygon um. Das Graphiksystem 100 umfaßt in dem dargestellten Beispiel 2 Textur-Maschinen 104a, 104b, die die Polygondaten von dem Prozessor 102 empfangen. Jeder der Texturmaschinen 104a und 104b ist ein Speicher mit wahlfreiem Zugriff 106a und 106b zugeordnet.

Das Graphiksystem umfaßt ferner eine Mehrzahl von Bildaufbereitungsmaschinen (Render-Engine) 108a bis 108d, denen jeweils ein Speicher 110 a bis 110 d zugeordnet ist. Die Bildaufbereitungsmaschinen 108a bis 108d empfangen die von dem Prozessor 102 bereitgestellten Polygondaten an einem ersten Eingang und ferner die durch die Texturmaschinen aufbereiteten Daten an einem zweiten Eingang, wobei jeweils zwei Bildaufbereitungsmaschinen 108a, 108b bzw. 108c, 108d einer Texturmaschine 104a bzw. 104b zugeordnet ist. Die Bildaufbereitungsmaschinen 108a bis 108d sind mit einer RAMDAC-Schaltung 112 verbunden, die die erforderliche Digital/Analog-Umwandlung der empfangenen Signale zur Anzeige auf einem Bildschirm 114 durchführt.

Die gemäß der vorliegenden Erfindung beschriebenen Verfahren sind in dem in Fig. 1 dargestellten Graphiksystem 100 implementierbar, es wird jedoch darauf hingewiesen, daß die vorliegende Erfindung nicht auf die in Fig. 1 dargestellte spezielle Ausgestaltung begrenzt ist. Für das Verständnis der vorliegenden Erfindung erfolgt die Beschreibung unter Bezugnahme auf das Graphiksystem in Fig. 1. Hinsichtlich der einzelnen Maschinen in Fig. 1 wird darauf hingewiesen, daß jede der einzelnen Maschinen an ihrem Eingang einen Abtastumwandler (nicht dargestellt) umfaßt, der später noch genauer beschrieben wird.

Das in Fig. 1 dargestellte Graphiksystem ist eine beispielhafte Architektur zur parallelen Bildaufbereitung unter Verwendung der verschachtelten Rahmenpartitionierung. Diese Architektur kann selbstverständlich hinsichtlich der Anzahl von teilnehmenden Bildaufbereitungs- und Texturmaschinen verändert werden.

Wie bereits ausgeführt wurde, bedient der Prozessor 102 das gesamte Bildaufbereitungs-Teilsystem, und er wandelt insbesondere die scheitelpunktbezogenen Objektbeschreibungen in individuelle Datensätze pro Polygon um. Diese Polygondaten werden dann den verschiedenen Maschinen innerhalb des Systems über einen gemeinsamen Bus 116 zugeführt. Die Polygondatensätze enthalten die Startwerte, x- und y-Ableitungen für die linearen Kantenfunktionen und für die Farbwerte und Textur-Koordinaten, die über das Dreieck interpoliert werden. Der Prozessor 102 ist unabhängig von der Anzahl von Maschinen, die die Bildaufbereitungsaufgabe übernehmen. Jede der einzelnen Maschinen weiß, welches der Pixel in dem Verschachtelungsschema ihr zugeordnet ist.

Nachfolgend werden die einzelnen Aspekte der vorliegenden Erfindung im Detail beschrieben.

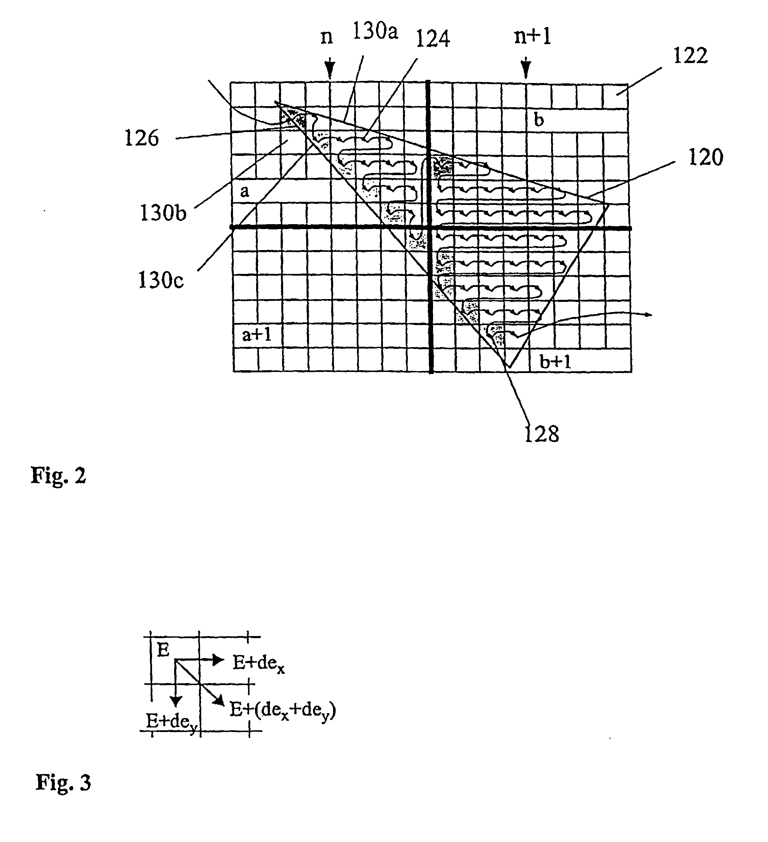

Anhand der Fig. 2 wird zunächst die sog. streifenbasierte Abtastumwandlung (Strip Based Scan Conversion) näher beschrieben. In Fig. 2 ist ein Graphikgrundelement 120 in der Form eines Dreiecks dargestellt, das sich über eine Mehrzahl von Pixeln 122 erstreckt. Die in Fig. 2 dargestellten Kästchen stellen jeweils ein Pixel dar. Der Verlauf der Abtastung ist durch die Abtastlinie 124 dargestellt, die sich von einem Eintrittspunkt 126, bei dem beispielsweise von einem vorhergehenden Dreieck in das in Fig. 2 dargestellte Dreieck 120 übergegangen wird, zu einem Ausgangspunkt 128, von dem aus zu einem weiteren Dreieck, welches zu verarbeiten ist, übergegangen wird, erstreckt.

Wie anhand der Fig. 2 zu erkennen ist, ist der durch die Pixel 122 aufgespannte Bereich in vier Blöcke a, a+1, b und b+1 unterteilt. Wie sich ferner aus dem Verlauf der Abtastlinie 124 ergibt, werden zunächst diejenigen Pixel im Block a abgetastet, die dem Dreieck 120 zugeordnet sind. Anschließend wird zu einem nächsten Block, im vorliegenden Fall zum Block a+1 übergegangen, und die in diesem Block dem Dreieck 120 zugeordneten Pixel werden abgetastet. Auf diese Art und Weise werden die einzelnen Blöcke a bis b+1 abgetastet.

Wie aus Fig. 2 ferner zu ersehen ist, kann gemäß einem bevorzugten Ausführungsbeispiel die Organisation der einzelnen Blöcke so sein, daß die Blöcke a und a+1 zu einem ersten Streifen n zusammengefaßt sind, und die Blöcke b und b+1 zu einem zweiten Streifen n+1 zusammengefaßt sind. In diesem Fall werden ähnlich wie auf die oben beschriebene Art und Weise zunächst diejenigen Blöcke in einem Streifen n durchlaufen, und erst wenn sämtliche Blöcke dieses Streifens durchlaufen sind, wird in den angrenzenden Block n+1 gewechselt, und dort werden dann die einzelnen Blöcke b und b+1 auf die oben beschriebene Art abgetastet. Gemäß diesem Ausführungsbeispiel wird ein Streifen als eine Spalte von Blöcken definiert, wobei der Streifen einen Block breit ist. Ein Dreieck bzw. ein Graphikgrundelement 120 erstreckt sich in einen oder mehrere der Streifen und unterteilt die Abtastlinien somit in Fragmente. Gemäß einem bevorzugten Ausführungsbeispiel enthält ein Abtastlinienfragment nicht mehr Pixel als durch die Breite eines Speicherblocks festgelegt ist.

Anstatt alle Abtastlinien vollständig und unabhängig von irgendeiner Blockgrenze zu durchlaufen, werden gemäß der vorliegenden Erfindung zunächst alle Abtastlinienfragmente innerhalb eines Streifens verarbeitet, bevor zum nächsten Streifen weitergegangen wird - entweder in positiver oder negativer y-Richtung, abhängig von der Ausrichtung des Dreiecks. Der Eingangspunkt für den nächsten Streifen (Streifeneintrittsposition) wird während des Abtastens des derzeitigen Streifens erfaßt. Befindet sich der Abtastumwandler während des Abtastens in der letzten Pixelspalte an der Streifengrenze, kann der Nachbarstreifen dahingegend überprüft werden, ob dort noch sichtbare Pixel existieren. Dies ist sehr ähnlich zu der Vorausschau in die nächste Linie während der Abtastung der derzeitigen Linie, um die Rückkehrposition vom Abtastlinienende (Kantenrückkehrposition) zu bestimmen.

Es kann also gesagt werden, daß auf einer Makro-Ebene das Dreieck Streifen um Streifen und Block um Block durchlaufen wird, wohingegen auf einer Mikro-Ebene das Dreieck Abtastlinie um Abtastlinie und Pixel um Pixel durchlaufen wird. Die primäre Achse zum Durchlaufen der Streifen ist die vertikale Achse, und die primäre Achse zum Durchlaufen der Abtastlinien ist die horizontale Achse.

Der Vorteil des oben beschriebenen Verfahrens besteht darin, daß dadurch, daß zunächst einzelne Blöcke vollständig durchlaufen werden, die Anzahl von Speicherseitenfehlern pro Graphikgrundelement auf das absolute Minimum reduziert werden kann, da während des Durchlaufens der einzelnen Blöcke nur auf eine entsprechende Speicherseite zugegriffen wird. Ein weiterer Vorteil besteht darin, daß die Zugriffe auf alle Pixel für das Graphikgrundelement in einem Speicherblock aufeinanderfolgend erfolgen, so daß die erforderliche Zeit, während der eine Seite offen gehalten werden muß, reduziert wird. Ein weiterer Vorteil besteht darin, daß durch die Bündelung der Zugriffe auf einen Block die Zeitdauer der Datenübertragung (Bursts) erhöht wird, wobei eine längere Zeitdauer der Datenübertragung das Verstecken von Vorladeund Reihen-Aktivierungsoperationen in Systemen mit mehreren Speicherbänken, wie z. B. SDRAMs, ermöglicht wird. Ein weiterer Vorteil besteht darin, daß die Textur-Cache-Speichergröße aufgrund der Verkürzung der Abtastlinien reduziert wird.

Ein weiterer Vorteil besteht darin, daß aufgrund der Erfordernisses, daß der Eintrittspunkt für den nächsten Streifen gespeichert werden muß, die damit einhergehende Erhöhung der Gatteranzahl bei einer Hardwarerealisierung nur moderat ist, z. B. ausgehend von einem herkömmlichen System mit 30 K Gattern erfordert die vorliegende Erfindung ein System mit 35 K Gattern.

Gemäß einem weiteren Aspekt der vorliegenden Erfindung, kann die Leistungsfähigkeit des Graphiksystems durch eine sogenannte diagonale Abtastung erhöht werden. Zusätzlich zu den Standardbewegungsrichtungen "horizontal" und "vertikal" wird die Möglichkeit von diagonalen Schritten zu dem System hinzugefügt. Wenn keine Notwendigkeit besteht in der derzeitigen Abtastzeile fortzufahren, weil beispielsweise das nächste Pixel nicht sichtbar ist, und wenn das Pixel in der vertikalen Abtastrichtung ebenfalls nicht sichtbar ist, kann ein diagonaler Schritt durchgeführt werden. Dies ist insbesondere für degenerierte, kleine und schmale Dreiecke sinnvoll, und führt zu einer Einsparung von ca. 50% der Schritte. Betrachtet man durchschnittliche Dreiecksgrößen, sind die Einsparungen geringer (< 10%) und hängen tatsächlich stark von der durchschnittlichen Polygongröße ab. In der Praxis muß jedoch eine Abtastumwandlungshardware neben Dreiecken auch Linien handhaben, z. B. für Drahtrahmenmodelle, und in dieser Situation bringt die Einführung der diagonalen Schritte ihre Vorteile.

Die Vorgehensweise ist in Fig. 3 näher dargestellt. Ausgegangen wird von einem Pixel E, welches gerade abgetastet wird. Anschließend wird bestimmt, ob ein in Abtastrichtung benachbartes Pixel $E+de_x$ dem Graphikgrundelement zugeordnet ist, und ferner wird bestimmt, ob ein Pixel $E+de_y$, das in einer Richtung senkrecht zur Abtastrichtung benachbart zu dem abgetasteten Pixel E angeordnet ist, dem Graphikgrundelement zugeordnet ist. Wenn weder das Pixel $E+de_x$ noch das Pixel $E+de_y$ dem Graphikgrundelement zugeordnet sind, wird im nächsten Schritt das Pixel E($de_x$ + $de_y$) abgetastet, welches sowohl benachbart zu dem Pixel E+$de_x$ als auch benachbart zu dem Pixel E+$de_y$ liegt.

Der Vorteil dieser diagonalen Abtastung besteht darin, daß hierdurch beim Linienzeichnen die Leistungsfähigkeit des Systems erheblich erhöht wird, und auch für das Zeichnen von Polygonen kann eine Erhöhung der Leistungsfähigkeit erreicht werden. Es liegt auf der Hand, daß die gerade beschriebenen beiden Aspekte, nämlich die blockweise Abtastung sowie die diagonale Abtastung in Kombination verwendet werden können. Betrachtet man sich das in Fig. 2 dargestellte Beispiel und hier insbesondere die in Abtastrichtung an den Angriffspunkt 128 angrenzenden Pixel 130a-130c, so ist ohne weiteres festzustellen, daß weder das Pixel 130a noch das Pixel 130b sichtbar sind, so daß in diesem Fall ein diagonaler Abtastschritt direkt zum Pixel 130c sinnvoll ist.

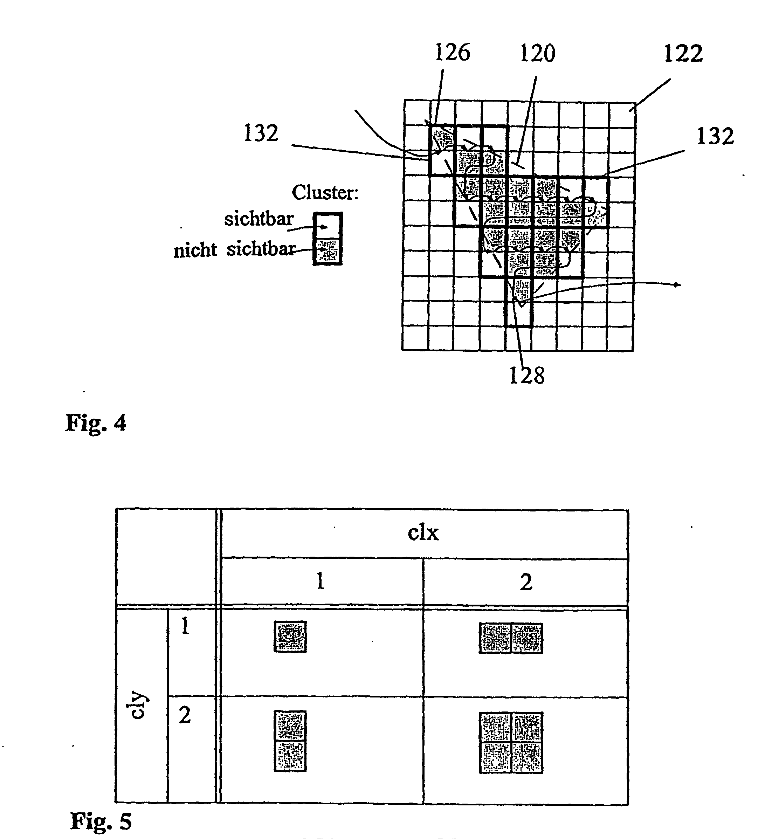

Anhand der Fig. 4 und 5 wird nachfolgend ein weiterer Aspekt der vorliegenden Erfindung beschrieben, nämlich die sogenannte Cluster-Abtastung oder der Cluster-Scan. Die Darstellung des Graphikgrundelements 120 in Fig. 4 ist ähnlich zu derjenigen in Fig. 2, so daß hier für die übereinstimmenden Elemente die gleichen Bezugszeichen verwendet werden.

Wie in Fig. 4 zu erkennen ist, sind jeweils zwei vertikal benachbarte Pixel zu einem Cluster 132 zusammengefaßt. Im linken Bereich der Fig. 4 ist beispielhaft, in vergrößerter Darstellung, ein Cluster 132 dargestellt, wobei ein nicht ausgefülltes Clusterelement ein nichtsichtbares Pixel und ein ausgefülltes Clusterelement ein sichtbares Pixel darstellt.

Für den Cluster-Scan werden, wie erwähnt, mehrere Pixel in einem Cluster gruppiert, wobei hier das Pixel die kleinste Einheit darstellt. Die Gruppierung der einzelnen Cluster erfolgt derart, daß diejenigen Pixel, die durch eine parallele Graphikbearbeitungshardware gleichzeitig verarbeitet werden, in einem Cluster zusammengefaßt sind. Die parallele Verarbeitung erfolgt hier in einer verriegelten (synchronen) Art und Weise. Bei einem beispielhaften Chip, der eine Mehrzahl von Bildaufbereitungspipelines aufweist, ist es wünschenswert, daß ein gegebenes Graphikgrundelement in Clustern durchlaufen wird und nicht in Pixeln. Das Ausgangssignal, welches durch einen solchen parallelen Abtastumwandler bereitgestellt wird, umfaßt Bewegungsinformationen für die parallele Interpolation der Parameter der Pixel, die in dem Cluster enthalten sind, sowie eine Sichtbarkeits-Flag für jedes Pixel.

Bei dem in Fig. 4 dargestellten Beispiel sind zwei Pixel zu einem Cluster zusammengefaßt, wobei das jeweils obere Pixel in dem Cluster durch eine erste Pipeline und das jeweils untere Pixel in dem Cluster durch eine zweite Pipeline der Bildaufbereitungseinheit parallel verarbeitet wird.

Ein Verfahren, mittels dem ein Abtastumwandler auf der Grundlage eines Clusters ein Graphikgrundelement durchläuft, muß sämtliche Cluster durchlaufen, die ein oder mehrere sichtbare Pixel enthalten. Cluster, die keine sichtbaren Pixel enthalten, werden nicht überquert. Abhängig von der Anzahl von parallelen Bildaufbereitungspipelines und abhängig von der Speicherorganisation kann die optimale Clustergröße und -form ausgewählt werden, wie dies in der Tabelle in Fig. 5 gezeigt ist. In Fig. 5 ist mit "clx" die Ausdehnung eines Clusters in x-Richtung und mit "cly" die Ausdehnung eines Clusters in y-Richtung bezeichnet. Allgemein gesprochen, kann ein Cluster n-benachbarte Pixel in Abtastrichtung und m-benachbarte Pixel in einer Richtung senkrecht zur Abtastrichtung umfassen, wobei n und m größer oder gleich Eins sind. Die Anzahl der erforderlichen Graphikverarbeitungspipeline ist durch das Produkt von n und m bestimmt. Betrachtet man beispielhaft den 2x2 Cluster in Fig. 5 (Tabelle unten rechts), so wird deutlich, daß in einem solchen Fall das Graphikverarbeitungssystem eine Bildaufbereitungseinheit aufweisen muß, die vier parallele Pipelines umfaßt.

Bevorzugterweise sind alle Pixel innerhalb eines Clusters in einem Speicherwort abgelegt. Bei einem weiteren bevorzugten Ausführungsbeispiel sind die Formen der Cluster auf rechteckige Formen beschränkt, und in diesem Fall sind die Cluster durch ihre Pixelbreite (clx) und Pixelhöhe (cly) bestimmt. Bevorzugterweise wird die Clusterbreite und -höhe auf 2x2, 4x4, 8x8, 16x16, ... begrenzt.

Der Vorteil des Cluster-Scans besteht darin, daß dadurch eine verriegelte (synchrone) Abtastung einer Mehrzahl von Pixeln unterstützt wird, und daß mittels eines einzelnen Abtastumwandlers mehrfache Pixelpipelines versorgt werden können, bei vernachlässigbarem zusätzlichem Aufwand verglichen mit dem Abtasten einzelner Pixel.

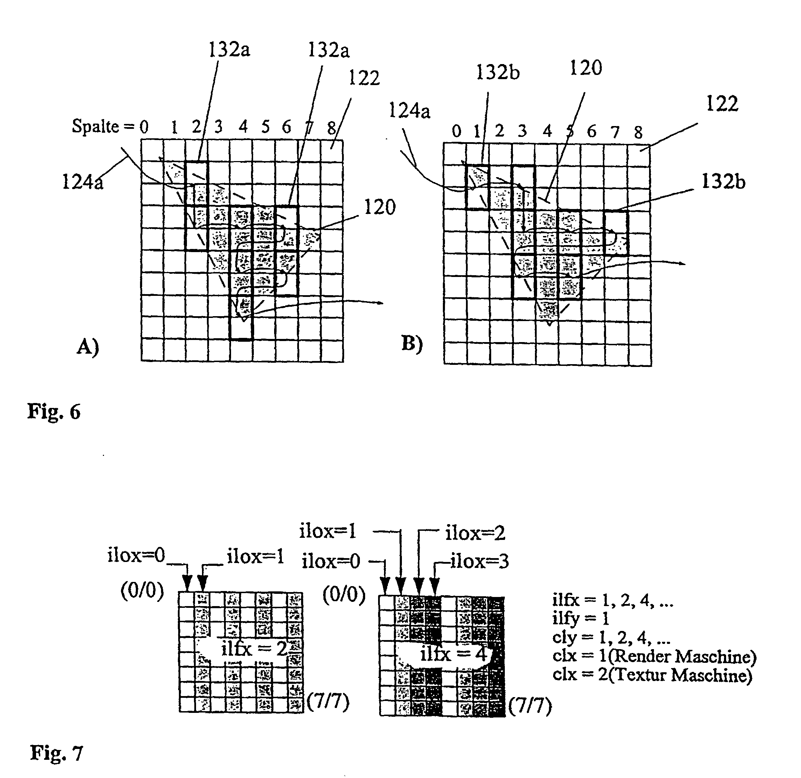

Gemäß einem weiteren Aspekt der vorliegenden Erfindung, der nachfolgend anhand der Fig. 6 und 7 näher beschrieben wird, kann die Parallelität innerhalb eines Graphikverarbeitungssystems durch einen sogenannten verschachtelten Abtastvorgang (Interleaved Scan) weiter erhöht werden, und somit auch die Leistungsfähigkeit eines solchen Systems.

In Fig. 6A und 6B ist das bereits anhand der Fig. 4 und anhand der Fig. 2 beschriebene Graphikgrundelement 120 dargestellt, wobei die Abbildung in Fig. 6A die Verarbeitung durch eine erste Graphikverarbeitungsmaschine, und die Fig. 6B die Verarbeitung durch eine zweite Graphikverarbeitungsmaschine darstellt. Bei diesem Beispiel sind, ähnlich wie in Fig. 4, jeweils 2 vertikal benachbarte Pixel zu einem Cluster zusammengefaßt, wobei die erste Graphikverarbeitungsmaschine die Cluster 131a, die bei dem dargestellten Beispiel in den geradzahligen Spalten angeordnet sind, verarbeitet, und die zweite Maschine die Cluster 132b verarbeitet, die in den ungeradzahligen Spalten angeordnet sind. Ferner sind in Fig. 6a und 6b die jeweiligen Abtastlinien 124a und 124b dargestellt, die für die Abtastung der jeweiligen Pixel durchlaufen werden.

Mehrere Cluster-Bildaufbereitungseinheiten teilen sich eine Bildaufbereitungsaufgabe bezüglich eines Polygon 120, und abhängig von der Art der (verschachtelten) Rahmenpufferorganisation wird das Polygon 120 in Spalten, Zeilen oder beides unterteilt. Für den Abtastumwandler bedeutet dies, daß die Spalten/Zeilen, die nicht zu seiner Bildaufbereitungseinheit gehören, übersprungen werden müssen. Die bereits oben beschriebene Strategie hinsichtlich des Durchlaufs über die Abtastlinie und die Verwendung der streifenorientierten Strategie wird beibehalten. Nur die horizontalen/vertikalen Schritte müssen in diesem Fall mehrere Pixel oder Cluster überspringen.

Um den Grad der Parallelität zu beschreiben, der mittels der Verschachtelung in einem System erreicht wird, werden sogenannte Verschachtelungsfaktoren (Interleave Factor) ilfx, ilfy verwendet. Ferner werden die entsprechenden Spalten und Zeilen eines Clusters über die sogenannten Verschachtelungsverschiebungen (Interleave Offset) ilox, iloy den Bildaufbereitungsmaschinen zugeordnet.

Für die Verschachtelungsverschiebungen gelten die folgenden Beziehungen:

$$0 \leq ilox < ilfx$$

$$0 \leq iloy < ilfy.$$

Für das anhand der Fig. 6 dargestellte Beispiel bedeutet dies, daß der der Abtastung in Fig. 6A zugeordnete Abtastumwandler eine Verschachtelungsverschiebung von 0 (ilox = 0) aufweist, wohingegen der Abtastumwandler für die Verarbeitung gemäß Fig. 6B eine Verschachtelungsverschiebung von 1 (ilox = 1) aufweist. Der horizontale Verschachtelungsfaktor beträgt bei dem in Fig. 6 dargestellten Beispiel 2 (ilfx = 2), und der vertikale Verschachtelungsfaktor beträgt 1 (ilfy = 1). Die vertikale Verschachtelungsverschiebung ist für alle Maschinen gleich 0 (iloy = 0).

Mit anderen Worten ist die Verschachtelungsebene proportional zur Anzahl der im Graphiksystem enthaltenen Graphikverarbeitungsmaschinen. Der Cluster stellt die kleinste Einheit beim verschachtelten Abtasten dar, und die Gruppierung erfolgt entsprechend der Cluster.

Die oben beschriebene verschachtelte Abtastung hat den Vorteil, das hierdurch die Verwendung von mehreren, unabhängigen (unverriegelten) Bildaufbereitungseinheiten in einem System unterstützt wird, wobei dies fast ohne Erhöhung der Anzahl der Logikgatter bei einer Hardwareimplementierung erfolgt. Ein weiterer Vorteil besteht darin, daß durch eine Links-Verschiebung der Delta-Werte der Kantenfunktion größere Schritte erreicht werden können, und zwar entweder durch eine Festverdrahtung oder mittels Multiplexern auf eine flexible Art.

Anhand der Fig. 7 wird das Verschachtelungsschema beschrieben, das bei dem in Fig. 1 dargestellten Graphiksystem verwendet wird. Dort sind die vier Bildaufbereitungsmaschinen 108a-108d vorgesehen, die eine parallele Fragmentverarbeitung durchführen. Dies bedeutet, daß der Verschachtelungsfaktor in x-Richtung 4 und in y-Richtung 1 beträgt (iflx = 4, ifly = 1). Jede der Bildaufbereitungsmaschinen speichert nur den Teil des Rahmens, für den die jeweilige Maschine in ihrem Speicher verantwortlich ist. Die Bildaufbereitungsmaschinen werden mit Texturen von zwei getrennten Texturmaschinen versorgt, welche einen horizontalen Verschachtelungsfaktor von 2 und einen vertikalen Verschachtelungsfaktor von 1 (ilfx = 2, ilfy = 1) haben. In Fig. 7 ist linker Hand die Verschachtelung für die Texturmaschinen und rechter Hand die Verschachtelung für die Bildaufbereitungsmaschinen dargestellt. Jede der Texturmaschinen bedient zwei Bildaufbereitungsmaschinen und zum Beibehalten einer ausgeglichenen Leistungsfähigkeit bedeutet dies, daß die Texturmaschinen doppelt so viele Pixel pro Systemtakt bereitstellen müssen, wie die Bildaufbereitungsmaschinen. Wie aus Fig. 7 zu erkennen ist, werden für die Bildaufbereitungsmaschinen Cluster verwendet, die in x-Richtung eine Ausdehnung von einem Pixel haben, wohingegen die Texturmaschinen Cluster verwenden, die in x-Richtung eine Ausdehnung von 2 haben. In y-Richtung haben die entsprechenden Cluster die gleiche Ausrichtung. Hierdurch wird sichergestellt, daß bei jedem Systemtakt ausreichend viele Pixel den Bildaufbereitungsmaschinen bereitgestellt werden. Wie in Fig. 7 dargestellt ist, ist der Rahmenpuffer unter den Bildaufbereitungsmaschinen in Spalten unterteilt, und die Breite der Spalten ist durch die Breite des Bildaufbereitungs-Fußabdrucks (Footprint; die Anzahl der Cluster von Pixeln, die parallel auf einem Chip verarbeitet werden) bestimmt. Der Verschachtelungsfaktor bezeichnet die Beabstandung zwischen Spalten, die durch eine Bildaufbereitungsmaschinen bedient werden, und die Verschachtelungsverschiebung bezeichnet diejenige Spalte, für die eine Bildaufbereitungsmaschine verantwortlich ist.

Die Spaltenorganisation vereinfacht die Schnittstelle mit einem externen RAMDAC, der die Rahmenpufferinformationen sammelt und sie in eine analoge Form umwandelt und an einen Monitor ausgibt. Es wird darauf hingewiesen, daß die oben beschriebenen Aspekte der vorliegenden Erfindung, sowohl einzeln als auch in beliebiger Kombination miteinander verwendet werden können. Dies bedeutet, daß im Zusammenhang mit der Cluster-Abtastung selbstverständlich auch die anhand der Fig. 2 beschriebene streifen-basierte Abtastung durchgeführt werden kann, und ebenso kann die Diagonal-Abtastung durchgeführt werden, wobei in diesem Fall dann, wenn in Abtastrichtung und senkrecht zur selben benachbarte Cluster nicht sichtbar sind, eine diagonale Abtastung zum nächsten Cluster, auf ähnliche Weise wie es anhand der Fig. 3 beschrieben wurde, erfolgt.

Gleiches gilt für die Verschachtelungsabtastung, die ebenfalls in Verbindung mit der Streifen-basierten Abtastung, die anhand der Fig. 2 beschrieben wurde, durchgeführt werden kann. Eine Diagonal-Abtastung kann bei der verschachtelten Abtastung auch erfolgen.

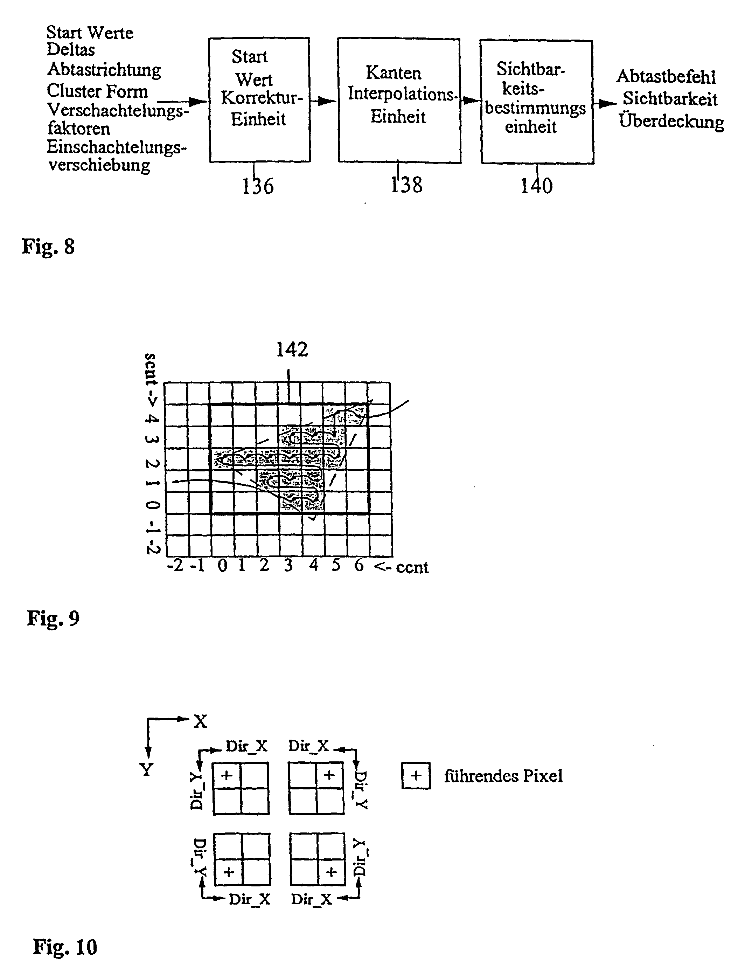

Nachfolgend wird anhand der Fig. 8 bis 21 die durch einen parallelen Abtastumwandler durchgeführten Schritte näher beschrieben. Anhand der Fig. 8 ist eine Architektur eines parallelen Abtastumwandlers dargestellt. Wie zu erkennen ist, enthält dieser im wesentlichen drei Blöcke, nämlich den Startwertkorrekturblock 134, den Kanteninterpolatorblock 136 und den Sichtbarkeits-Bestimmungsblock 140. Die Polygon- bzw. Graphikgrundelementdaten kommen in einer einheitlichen Form basierend auf linearen Kantenfunktionen an dem parallelen Abtastumwandler an, und in der ersten Stufe 136 werden die Startwerte auf eine gültige Startposition für die bestimmte Bildaufbereitungsmaschine eingestellt, und auch ein ausgewähltes Pixel in diesem Cluster. Ausgehend von dieser Startposition durchläuft der Kanteninterpolator das Polygon, wobei pro Taktzyklus ein Cluster berührt wird. Unsichtbare Cluster werden gemieden.

Abschließend werden im Block 140 für jedes Pixel, das in dem Cluster enthalten ist, Sichtbarkeitsbits berechnet, die angeben, ob das betreffende Pixel dem Dreieck bzw. Graphikgrundelement zugeordnet ist oder nicht.

Im nachfolgenden wird auf die einzelnen Stufen 136 bis 140 näher eingegangen.

Es sei angenommen, daß der Prozessor 102 (Fig. 1) den folgenden gleichförmigen Datensatz für jedes Graphikgrundelement bzw. Dreieck erzeugt, unabhängig davon, ob eine Cluster-Abtastung oder eine verschachtelte Abtastung durchgeführt wird. Dieser gleiche Datensatz enthält:

einen x/y-Ort eines Startpunktes (x-Start, y-Start);

lineare Kantenfunktionswerte für diesen Startpunkt (el-Start, enl-Start, en2-Start),

die horizontale und vertikale Abtastrichtung, die basierend auf der Dreiecksausrichtung (s. Fig. 27) bestimmt wird (dir-x, dir-y: 0 = Abtastung in Richtung zunehmender Koordinaten, 1 - Abtastung in Richtung abnehmender Koordinaten),

x/y-Inkrementalwerte für alle drei Kanten, um eine Bewegung um ein Pixel in horizontaler/vertikaler, gegebener Abtastrichtung zu ermöglichen (el-dx, el-dy, en1-dx, en1-dy, en2-dx, en2-dy); und

eine Begrenzungsbeschreibung relativ zu dem Startpunkt, nämlich einen zeilen- und Überspannungszählwert, der die aktiven Spalten/Zeilen ausgehend von dem Startpunkt in Abtastrichtung festlegt (ccnt-Start, scnt-Start, negativ für Pixel außerhalb der Begrenzung).

Die Festlegung des Bereichs der Begrenzung ist anhand der Fig. 9 näher dargestellt, und in diesem Fall sind die Parameter dir-x gleich 1 und dir-y gleich Null. Der aktive Bereich ist mit dem Bezugszeichen 142 versehen.

Überdies sei angenommen, daß jede Bildverarbeitungseinrichtung einen statischen Datensatz der folgenden Systeminformationen enthält:

Systemverschachtelungsfaktoren in x/y-Richtung (ilfx, ilfy);

Verschachtelungsverschiebungen innerhalb des Systems (ilox, iloy);

Clusterabmessungen (clx, cly); und

Speicherstreifenbreite in Pixel (stw).

In einem ersten Schritt erfolgt zunächst die Korrektur der empfangenen Startwerte, wobei zunächst eine Clusterkorrektur vorgenommen wird.

Der Gedanke hinter der Cluster-Abtastung besteht darin, nicht die Kantenfunktionen für alle Pixel innerhalb eines Clusters zu interpolieren, sondern stattdessen nur ein ausgewähltes Pixel zu verwenden. Die Startposition, die durch den Prozessor 102 bestimmt wird, ist nicht notwendigerweise die ideale Position, um eine Interpolation während des Durchlaufens eines Dreiecks durchzuführen. Aus Symmetriegründen während der Bewegungsbestimmung hat sich herausgestellt, daß es vorteilhaft ist, die Startposition auf ein sog. "führendes Pixel" (leading pixel) innerhalb des Clusters einzustellen. Das führende Pixel ist als dasjenige Pixel definiert, das den höchsten Spannen- und Spalten-Zählwert innerhalb des Clusters hat, also das nächstliegende Pixel in Abtastrichtung ist. Die Bestimmung des führenden Pixels für die vier möglichen Kombinationen von horizontaler/vertikaler Abtastrichtung ist in Fig. 10 für ein 2x2-Cluster dargestellt.

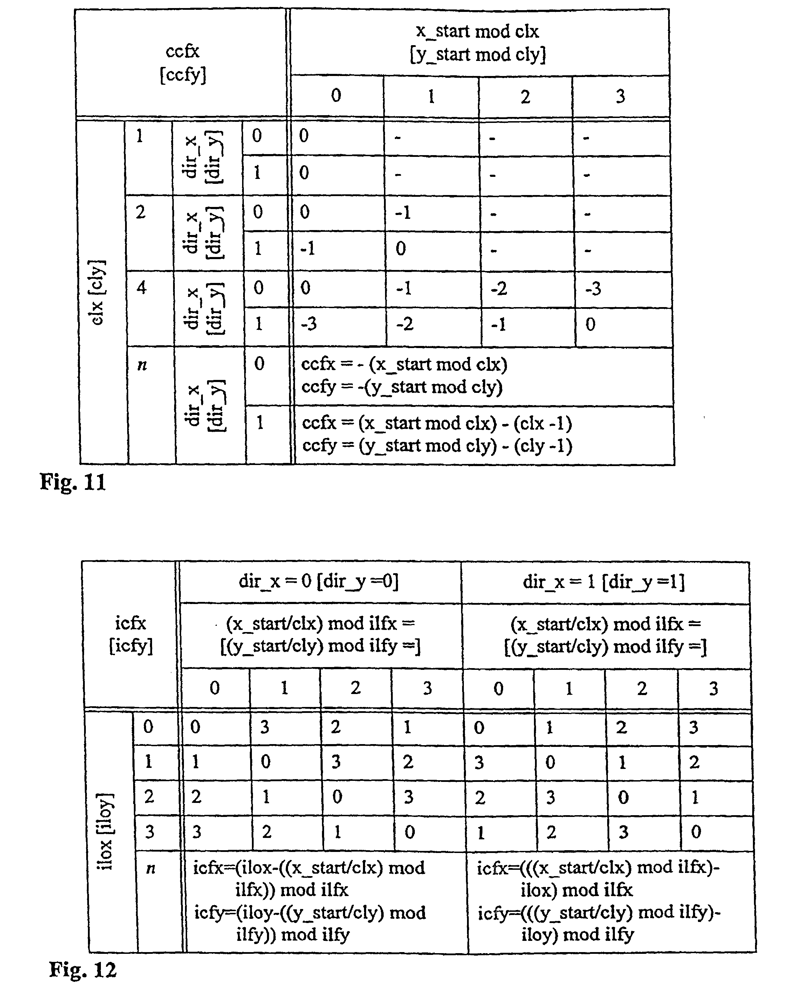

Die Clusterkorrekturfaktoren in x- und y-Richtung (clfx, clfy) werden dadurch berechnet, daß die x/y-Koordinaten des gegebenen Startpunktes mit der erwünschten Interpolationsposition des führenden Pixels verglichen werden. Die Clusterkorrekturfaktoren können entweder Null oder negativ sein, und ihre absoluten Werte sind immer kleiner als die Clusterausbreitung in der bestimmten Richtung. In Fig. 11 ist eine Tabelle dargestellt, die die Bestimmung der Clusterkorrekturfaktoren erläutert.

Neben der Korrektur der Cluster muß eine Verschachtelungskorrektur durchgeführt werden, nachdem jede Bildaufbereitungsmaschine nur diejenigen Cluster durchlaufen darf, die dieser gemäß der verschachtelten Rahmenpufferabbildung zugeordnet sind. Nachdem der Startpunkt, der durch den Prozessor 102 bestimmt ist, innerhalb eines Clusters sein kann, das einer anderen Bildaufbereitungsmaschine zugeordnet ist, muß für jede Bildaufbereitungsmaschine dasjenige erste Cluster in positiver Abtastrichtung bestimmt werden, für das dieselbe verantwortlich ist, und der Startwert muß auf ein Pixel in diesem Cluster eingestellt werden.

Die Verschachtelungskorrekturfaktoren (icfx, icfy; interleave correction factors) werden dadurch berechnet, daß die x/y-Koordinate des Startpunktes mit den der Bildaufbereitungsmaschine zugeordneten Verschachtelungsverschiebungen verglichen werden. Die Werte der Verschachtelungskorrekturfaktoren sind positiv und reichen von Null bis zum Verschachtelungsfaktor minus Eins. Anhand der Tabelle in Fig. 12 ist die Berechnung der Verschachtelungskorrekturfaktoren dargestellt.

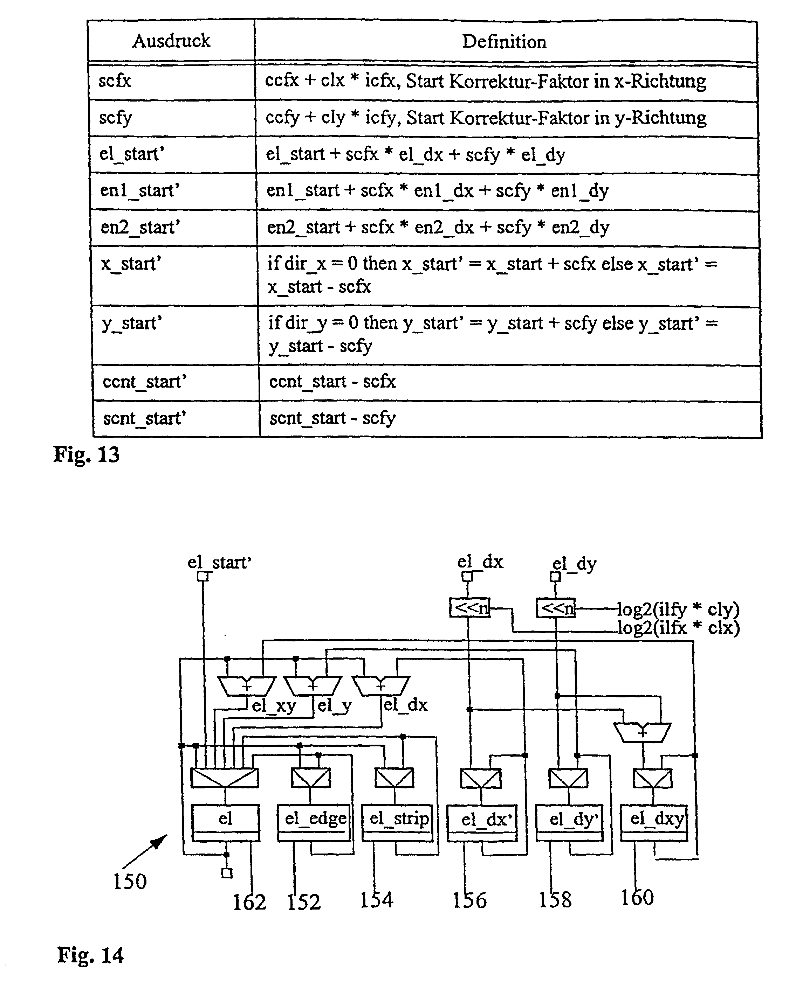

Nachdem die entsprechenden Korrekturfaktoren berechnet wurden, werden diese zu allgemeinen Startkorrekturfaktoren (scfx, scfy) zusammengefaßt, die dann auf alle Startwerte in Einheiten der Interpolationsdelta angewandt werden. Die Tabelle in Fig. 13 zeigt die durchzuführende Startwertkorrektur, wobei die in der linken Spalte angeführten Faktoren, die mit einem Apostroph versehen sind, die jeweils korrigierten Startwerte darstellen.

Nachdem die erforderliche Startwertkorrektur durchgeführt wurde, erfolgt anschließend im Block 138 die Kanteninterpolation, wobei die linearen Kantenfunktionen beginnend von dem korrigierten Startpunkt aus unter Verwendung eines Interpolators, wie er in Fig. 14 gezeigt ist, inkremental berechnet werden.

In Fig. 14 ist der Interpolator in seiner Gesamtheit mit dem Bezugszeichen 150 versehen. Der Interpolator 150 ermöglicht die Speicherung und Rückspeicherung der Kantenfunktionswerte für Kantenrückkehrpositionen (el-edge) im Register 152 und die Streifeneintrittspositionen (el-strip) im Register 154. Ferner werden die horizontalen, vertikalen und diagonalen Inkrementalwerte (el-dx, el-dy, el-dxy) in den Registern 156, 158 und 160 gespeichert. Die in diesen Registern gespeicherten Inkrementalwerte werden dem Arbeitsregister (el) 162 hinzugefügt. Zu Beginn der Abtastung eines Graphikgrundelements wird das Arbeitsregister 162 mit dem Kantenfunktionswert an dem Startpunkt geladen, und die Inkremental-Wert-Register 156 bis 160 werden mit den korrigierten Deltawerten geladen.

Drei solcher Interpolatoren werden verwendet, einer pro Kante, was zu einer gesamten Anzahl von neun Kantenfunktionsinterpolatoren pro Abtastumwandler führt. Die Multiplexer des Kanteninterpolators werden durch die Bewegungsbestimmungslogik gesteuert.

Eine ähnliche Struktur, wie die in Fig. 14, wird für die Spalten- und Spannen-Zählwertinterpolation verwendet. Abhängig von der Richtung, in die sich der Interpolator bewegt, werden entweder Null oder der Abstand in Pixel zum nächsten führenden Pixel, das durch das System besessen wird, von dem derzeitigen Spalten- oder Spannen-Zählwert abgezogen.

Neben der Interpolation muß natürlich festgestellt werden, ob benachbarte, noch abzutastende Pixel eine Kante des Graphikgrundelements überschritten haben, also nicht sichtbar sind.

Um die Bewegungen des Interpolators zu bestimmen, ist es wichtig zu wissen, wann zumindest ein Pixel eines benachbarten Clusters in der nächsten Abtastlinie die führende Kante überschritten hat. Nachdem die Ausrichtung der führende Kante relativ zur Abtastrichtung bekannt ist, muß nur ein spezifisches Pixel, nämlich das in y-Richtung am nächstliegende und in x-Richtung am weitesten entfernt liegende Pixel innerhalb dieses Clusters bezüglich seiner Kantenüberquerung getestet werden.

Überdies muß festgestellt werden, ob ein nachfolgender Cluster in der derzeitigen Abtastlinie eine nicht-führende Kante vollständig überschritten hat. In diesem Fall ist es ausreichend, eine Pixelspalte (die nächstliegende in x-Richtung) innerhalb dieses Clusters auf ein Überschreiten der nicht-führenden Kanten zu überprüfen.

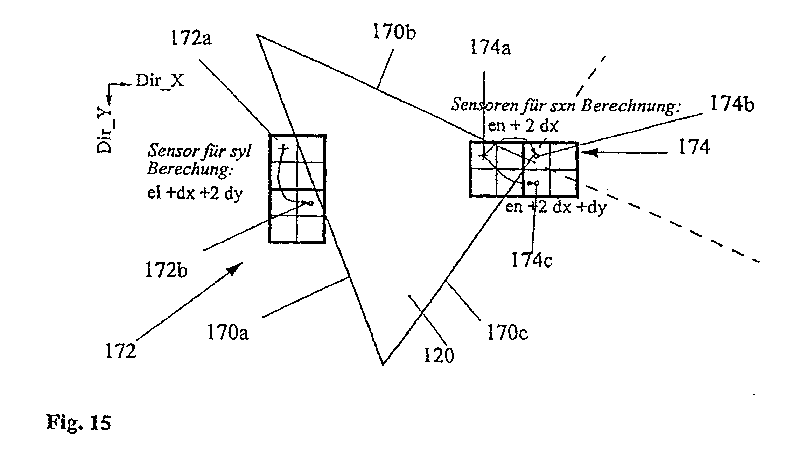

Die gerade beschriebenen Schritte sind anhand der Fig. 15 näher dargestellt, in der ein Abschnitt des Graphikgrundelements 120 mit seinen Kanten 170 a (führende Kante), 170 b und 170 c dargestellt ist. Oben links ist die jeweilige Abtastrichtung in x- und y-Richtung dargestellt.

Wie zu erkennen ist, muß für die Bestimmung, ob eine führende Kante überschritten wurde, ausgehend von dem führenden Pixel 172 a eine erste und eine zweite Addition durchgeführt werden, um an Pixel 172 b im benachbarten Cluster zu gelangen, und es ist in diesem Fall ausreichend, nur dieses Pixel 172 b hinsichtlich eines Überschreitens der Kante zu überprüfen.

Zum Überprüfen, ob ein nachfolgender Cluster eine nicht-führende Kante überschritten hat, wird ausgehend von dem führenden Pixel 174a die Pixel 174b und 174 c in der nächstliegenden Spalte des nachfolgenden Clusters bestimmt. Es ist ausreichend, nur diese zwei Pixel hinsichtlich einer überquerung der nicht-führenden Kanten zu überprüfen.

Der Vorteil dieser Vorgehensweise besteht darin, daß nichtalle Pixel eines Clusters überprüft werden müssen.

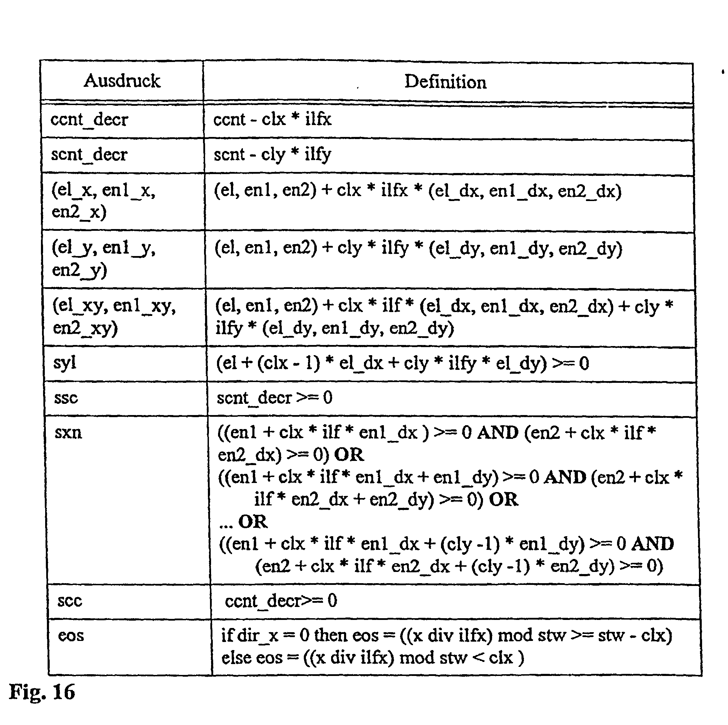

In Fig. 16 ist eine Tabelle gezeigt, anhand der die Bestimmung des Überschreitens einer Kante anhand der im vorhergehenden beschriebenen einzelnen Parameter, die durch den Interpolator verwendet werden, gezeigt ist.

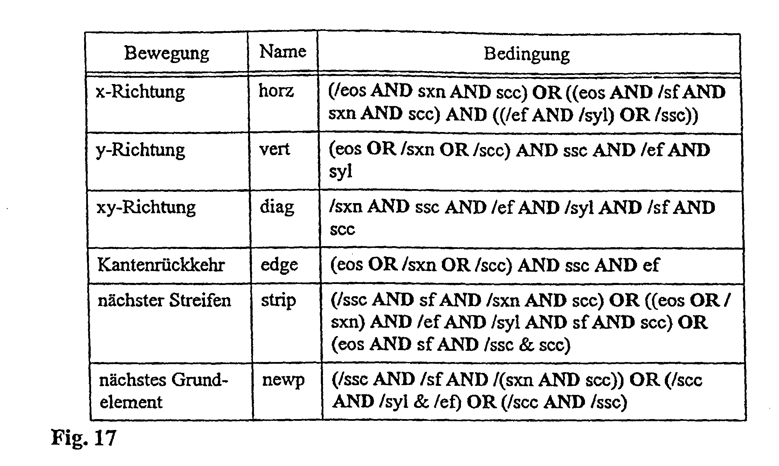

Neben der Bestimmung, ob beim Abtasten einer Abtastlinie eine Kante des Graphikgrundelements überschritten wurde, ist es zusätzlich erforderlich, dem Abtastumwandler anzuzeigen, auf welche Art und Weise er sich durch das Graphikgrundelement zu bewegen hat. Hierfür ist eine Bewegungsbestimmungslogikschaltung vorgesehen, die auf der Grundlage der im vorhergehenden beschriebenen Bestimmung des Überschreitens einer Kante die Bewegungsrichtung für die Kanteninterpolatoren bestimmt. In Fig. 17 ist eine Tabelle dargestellt, die Boolesche-Ausdrücke enthält, die eine Bewegungsrichtung für die Kanteninterpolatoren enthält, die ausgehend von den positiven Kantensensorwerten, die in der Tabelle in Fig. 16 gezeigt sind, abgeleitet werden, und wodurch die korrekte Bewegung für diesen Zustand definiert ist.

Der in der Tabelle in Fig. 17 dargestellte Wert "ef" bezeichnet eine Kanten-Flag, die anzeigt, ob in der derzeitigen Abtastlinie bereits eine gültige Kantenrückkehrposition für die nächste Abtastlinie gefunden würde. Die Streifen-Flag "sf" zeigt an, ob in dem derzeitigen Streifen eine gültige Streifeneintrittsposition für den nächsten Streifen gefunden wurde.

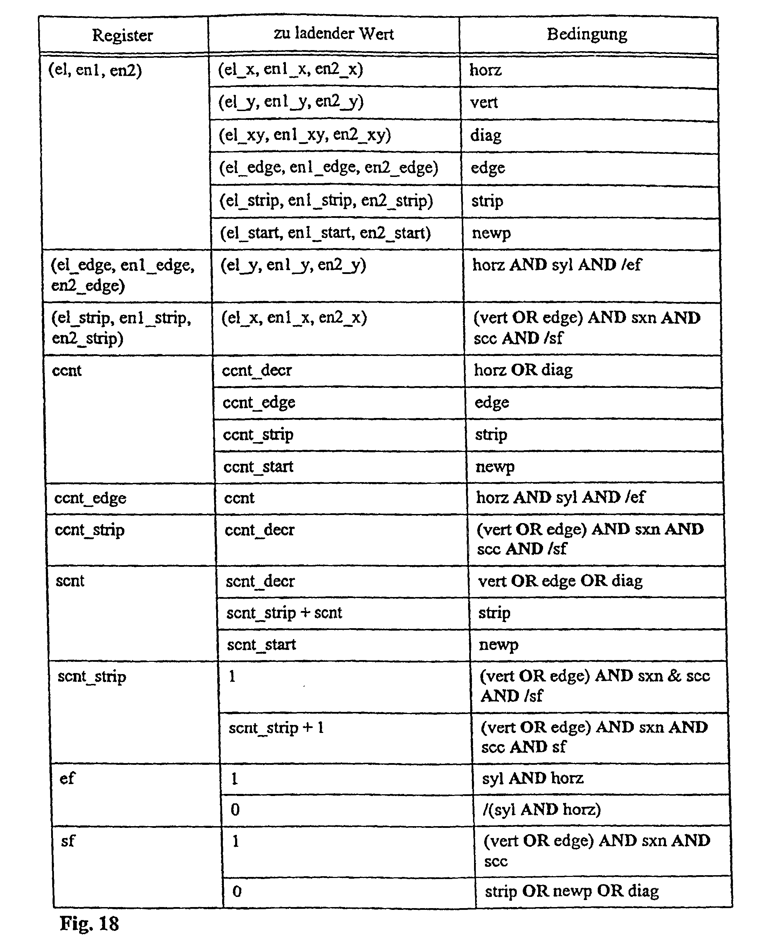

Auf der Grundlage der ausgewählten Bewegungen und dem Status der Kanten- und Streifen-Flags werden die Interpolatorregister und -Flags aktualisiert, wie dies in der Tabelle in Fig. 18 gezeigt ist. Wenn keine der in Fig. 18 gezeigten Bedingungen erfüllt ist, wird das jeweilige Register nicht aktualisiert.

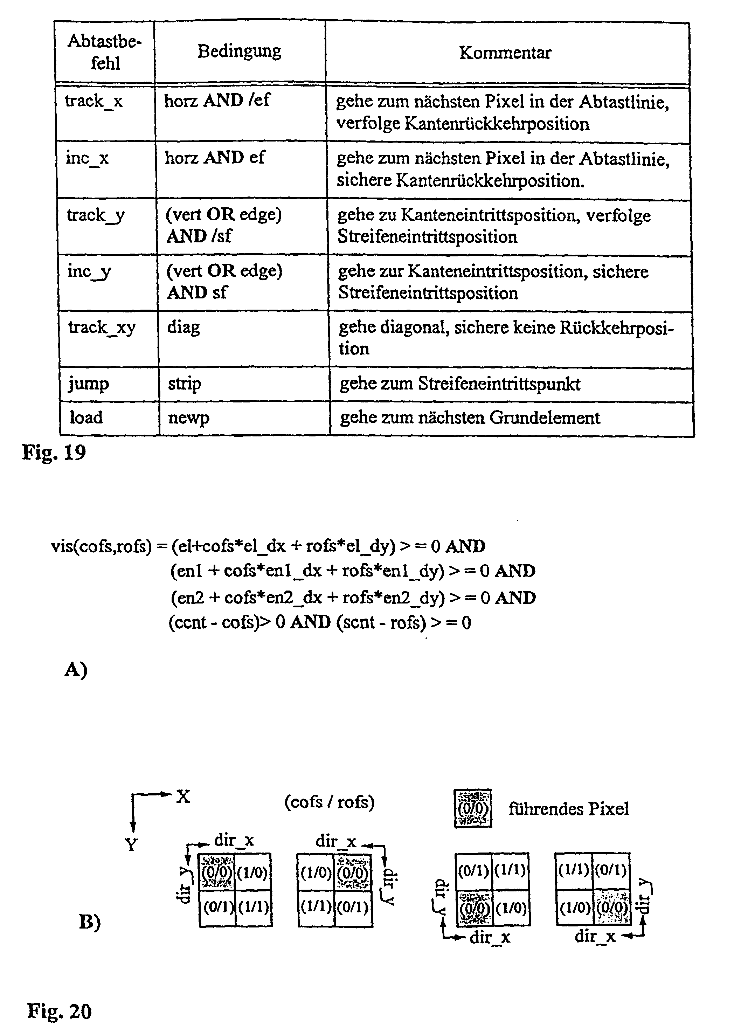

Neben den Kantenfunktioninterpolatoren müssen auch alle anderen Interpolatoren für andere Parameter, die sich über das Polygon ändern können, z.B. Texturkoordinaten oder Gouraud-Farben, aktualisiert werden. Zwar könnten diese Interpolatoren direkt durch die Bewegungsvariablen, die Kanten-Flag und die Streifen-Flag gesteuert werden, jedoch wird stattdessen eine sehr kompakte Kodierung für diese Informationen vorgeschlagen, die den gesamten erforderlichen Inhalt für die Parameterinterpolation bereitstellt. Dieser Kode wird als Interpolator- oder Abtast-Befehl bezeichnet. In der Tabelle in Fig. 19 sind diese Abtastbefehle gezeigt.

Wie bereits oben ausgeführt wurde, müssen für die einzelnen Pixel, die abgetastet werden, Sichtbarkeitstests durchgeführt werden, um zu bestimmen, ob diese Pixel den abgetasteten Graphikgrundelement zugeordnet sind oder nicht. Der gesamte Satz von Kantenparametern wird nur für ein Pixel innerhalb eines Clusters interpoliert, jedoch ist es hinsichtlich der Bestimmung der Sichtbarkeit der einzelnen Pixel (vis) erforderlich, die Kantenparameter für alle Pixel heranzuziehen. Um dies zu erreichen, werden die Kantenparameter für diejenigen Pixel, die nicht interpoliert wurden, aus den interpolierten Parametersätzen durch entsprechende Addition der Interpolations-Deltas erhalten, wie dies in Fig. 20A gezeigt ist. Der Abstand eines Pixels innerhalb eines Clusters zu dem führenden Pixel wird als Zeilenversatz (rofs; $0 \leq rofs < clx$) in y-Richtung und als Spaltenversatz (cofs; $0 \leq cofs < cly$) in x-Richtung bezeichnet. Zur Verdeutlichung dieser Notation ist der entsprechende Versatz für unterschiedliche Cluster und unterschiedliche Abtastrichtungen in Fig. 20B schematisch dargestellt.

Nachdem nur das Vorzeichen der Kantenfunktion für die nicht-führenden Pixel berechnet werden muß, hält sich der Anstieg der erforderlichen Gatter bei einer Hardwarerealisierung für die Sichtbarkeitsbestimmung mehrerer Pixel in Grenzen.

Wie die vorhergehende Beschreibung dargelegt hat, betrifft die vorliegende Erfindung ein Verfahren zum Durchführen von parallelen Pixelabtastumwandlungen in einer Hardware-Pipeline und schafft eine günstige und sehr vielseitig einsetzbare Implementierung einer Abtastumwandlung für die parallele Bildaufbereitung. Es wird eine flexible Systemarchitektur mit einer Skalierbarkeit auf verschiedenen Ebenen unterstützt, und eine Bildaufbereitungsmaschine kann eine parallele Bildaufbereitung bezüglich einer beliebigen Anzahl von Pixeln mit mehreren Bildaufbereitungspipelines durchführen. Mehrere Bildaufbereitungspipelines innerhalb eines Systems können die Bildaufbereitungsaufgabe in einer verschachtelten Art und Weise durchführen. Der Fußabdruck der Pixel, der in einem Maschinenzyklus parallel aufbereitet werden kann, kann eine beliebige Anzahl von Reihen und Spalten umfassen. Überdies wird das Problem der verschlechterten Speicherbandbreitenausnutzung mit abnehmenden Dreiecksgrößen gelöst, nachdem eine optimierte Abtastsequenz für blockweise organisierte Speicher vorgeschlagen wird.

Somit kann gemäß der vorliegenden Erfindung pro Systemtaktzyklus auf einem Chip eine Mehrzahl von Pixeln verarbeitet werden, und ferner können mehrere Chips die Rasterisierung eines Graphikelements, z.B. eines Dreiecks, untereinander aufteilen. Somit schafft die vorliegende Erfindung mehrfache Ebenen für die parallele Bildrasterisierung, wobei vorteilhafterweise für die Rahmenpufferspeicherung die Standard DRAM Technologie (z.B. synchrone DRAMs) verwendet werden. Durch die vorliegende Erfindung werden die Probleme der abnehmenden Speicherverwendung und der gering Textur-Cache-Trefferrate, die normalerweise mit der parallelen Bildrasterisierung einhergehen, gelöst.

**Patentansprüche**

1. Verfahren zur Rasterisierung eines Graphikgrundelements (120) in einem Graphiksystem (100), um ausgehend von Graphikgrundelement-Beschreibungsdaten Pixeldaten für das Graphikgrundelement zu erzeugen, wobei das Graphiksystem (100) einen Speicher aufweist, der in eine Mehrzahl von Blöcken (a, a+1, b, b+1) unterteilt ist, die jeweils einem vorbestimmten einer Mehrzahl von Bereichen auf einem Abbildungsschirm (114) zugeordnet sind, mit folgenden Schritten:

   Zuordnen jedes Blocks der Mehrzahl von Blökken (a,a+1,b, b+1) einer eigenen und unterschiedlichen Speicherseite in dem Speicher;

   Abtasten der dem Graphikgrundelement (120) zugeordneten Pixel in einem vollständigen Block, in den sich das Graphikgrundelement erstreckt, ohne Blockwechsel;

Wiederholen des vorhergehenden Schrittes bis alle dem Graphikgrundelement zugeordneten Pixel in jedem der Mehrzahl von Blöcken, in denen sich das Graphikgrundelement erstreckt, abgetastet sind; und

Ausgeben der Pixeldaten.

**2.** Verfahren nach Anspruch 1, bei dem der Schritt des Abtasten folgende Schritte umfaßt:

Abtasten eines ersten Blocks (a), in dem eine Startposition (26) für das Graphikgrundelement (120) angeordnet ist;

wenn alle dem Graphikgrundelement zugeordneten Pixel in dem ersten Block (a) abgetastet sind, Bestimmen, ob ein zu dem ersten Block benachbarter, zweiter Block (a+1) dem Graphikgrundelement zugeordnete Pixel enthält, und, falls dies der Fall ist, Abtasten der dem Graphikgrundelement zugeordneten Pixel in dem zweiten Block (a+1); und

Wiederholen der vorhergehenden Schritte bis alle dem Graphikgrundelement zugeordneten Pixel in der Mehrzahl von Blöcken abgetastet sind.

**3.** Verfahren nach Anspruch 1, bei dem die Mehrzahl von Blöcken in Streifen (n, n+1) zusammengefaßt sind, wobei jeder Streifen jeweils Blöcke (a, a+1) umfaßt, die in einer Richtung senkrecht zu einer Abtastrichtung angrenzend zueinander angeordnet sind, wobei im Schritt des Abtastens zunächst die dem Graphikgrundelement zugeordneten Pixel für die Blöcke (a, a+1) eines ersten Streifens n abgetastet werden und nachfolgend die Pixel in Blöcken (b, b+1) weiterer Streifen (n+1).

**4.** Verfahren nach Anspruch 3, bei dem im Schritt des Abtastens nach dem Abtasten der Blöcke eines Streifens bestimmt wird, ob in den Blöcken eines benachbarten Streifens (n+1) dem Graphikgrundelements zugeordneten Pixel enthalten sind, und, wenn dies der Fall ist, Abtasten des benachbarten Streifens (n+1).

**5.** Verfahren nach Anspruch 3 oder 4, bei dem während des Abtastens eines Streifens eine Startposition für die Abtastung des nächsten Streifens bestimmt wird.

**6.** Verfahren nach einem der Ansprüche 1 bis 5, bei dem die dem Graphikgrundelements zugeordneten Pixel entlang einer Abtastlinie (124) abgetastet werden, wobei die Anzahl der Pixel in der Abtastlinie die Breite eines Speicherblocks nicht übersteigt, wobei nach dem Abtasten aller dem Graphikgrundelement zugeordneten Pixel in der Abtastlinie (124) die dem Graphikgrundelement zugeordneten Pixel in der nächsten Abtastlinie abgetastet werden.

**7.** Verfahren nach Anspruch 6, mit folgenden Schritten:

Bestimmen, ob ein erstes Pixel (130a), das in der Abtastlinie benachbart zu dem gerade abgetasteten Pixel angeordnet ist, dem Graphikgrundelement zugeordnet ist;

Bestimmen, ob ein zweites Pixel (130b), das in der nächsten Abtastlinie benachbart zu dem gerade abgetasteten Pixel angeordnet ist, dem Graphikgrundelement zugeordnet ist; und

falls weder das erste noch das zweite Pixel (130a, 130b) dem Graphikgrundelement zugeordnet ist, Abtasten eines weiteren, dem Graphikgrundelement zugeordneten Pixels (130c), das benachbart zu dem ersten Pixel (l30a) und benachbart zu dem zweiten Pixel (130b) ist.

**Claims**

**1.** Method for rasterizing a graphic primitive (120) in a graphics system (100) for generating pixel data for the graphic primitive, starting from graphic primitive description data, with the graphics system (100) having a memory divided into a plurality of blocks (a, a+1, b, b+1), each of which is associated with a predetermined one of a plurality of areas on a mapping screen (114), the method comprising the following steps:

associating each block of the plurality of blocks (a,a+1,b,b+1) with a distinct and specific memory page in the memory; and

scanning the pixels, which are associated with the graphic primitive (120), in a complete block into which the graphic primitive extends, without a change in blocks;

repeating the preceding step until all pixels, which are associated with the graphic primitive, have been scanned in each of the plurality of blocks into which the graphic primitive extends; and

outputting the pixel data.

**2.** Method as claimed in claim 1, wherein the step of scanning includes the following steps:

scanning a first block (a) in which a starting position (26) for the graphic primitive (120) is arranged;

once all the pixels associated with the graphic primitive have been scanned in the first block (a), determining whether a second block (a+1), which is adjacent to the first block, contains pixels which are associated with the graphic primitive, and, if this is the case, scanning the pixels, which are associated with the graphic primitive, in the second block (a+1); and

repeating the preceding steps until all of the pixels associated with the graphic primitive have been scanned in the plurality of blocks.

**3.** Method as claimed in claim 1, wherein the plurality of blocks are combined to form strips (n, n+1), each strip containing blocks (a, a+1), respectively, which are arranged, in a direction perpendicular to a scanning direction, adjacently to each other, the step of scanning initially comprising the scanning of the pixels, which are associated with the graphic primitive, for blocks (a, a+1) of a first strip (n), and, subsequently, scanning the pixels in blocks (b, b+1) of further strips (n+1).

**4.** Method as claimed in claim 3, wherein the step of scanning comprises determining, after scanning the blocks of a strip, whether any pixels which are associated with the graphic primitive are contained in the blocks of an adjacent strip (n+1), and, if this is the case, scanning the adjacent strip (n+1).

**5.** Method as claimed in claim 3 or 4, wherein during the scanning of a strip, a starting position for scanning the next strip is determined.

**6.** Method as claimed in any of claims 1 to 5, wherein the pixels associated with the graphic primitive are scanned along a scan line (124), the number of pixels in the scan line not exceeding the width of a memory block, wherein, after scanning all of the pixels associated with the graphic primitive in the scan line (124), the pixels associated with the graphic primitive are scanned in the next scan line.

**7.** Method as claimed in claim 6, comprising the following steps:

determining whether a first pixel (130a), which is arranged, in the scan line, adjacently to the pixel being scanned, is associated with the graphic primitive;

determining whether a second pixel (130b), which is arranged in the next scan line adjacent to the pixel being scanned, is associated with the graphic primitive; and

if neither the first pixel nor the second pixel (130a, 130b) is associated with the graphic primitive, scanning a further pixel (130c) associated with the graphic primitive and arranged adjacently to the first pixel (130a) and adjacently to the second pixel (130b).

**Revendications**

**1.** Procédé de conversion en une série de points d'un élément de base graphique (120) dans un système graphique (100), pour générer, à partir de données de description de l'élément de base graphique, des données de pixels de l'élément de base graphique, le système graphique (100) présentant une mémoire subdivisée en une pluralité de blocs (a, a+1, b, b+1) associés, chacun, à l'une prédéterminée d'une pluralité de zones sur un écran d'affichage (114), aux étapes suivantes consistant à :

associer chaque bloc de la pluralité de blocs (a, a+1, b, b+1) à une page de mémoire propre et distincte dans la mémoire ;
balayer les pixels associés à l'élément de base graphique (120) dans un bloc complet dans lequel s'étend l'élément de base graphique, sans changement de bloc ;
répéter l'étape précédente jusqu'à ce que soient balayés tous les pixels associés à l'élément de base graphique dans chacun de la pluralité de blocs dans lesquels s'étend l'élément de base graphique ; et
sortir les données de pixels.

**2.** Procédé selon la revendication 1, dans lequel l'étape de balayage comporte les étapes suivantes consistant à :

balayer un premier bloc (a) dans lequel est disposée une position de départ (26) de l'élément de base graphique (120) ;
lorsque tous les pixels associés à l'élément de base graphique dans le premier bloc (a) ont été balayés, déterminer si un second bloc (a+1) adjacent au premier bloc contient des pixels associés à l'élément de base graphique et, si tel est le cas, balayer les pixels associés à l'élément de base graphique dans le second bloc (a+1) ; et
répéter les étapes précédentes jusqu'à ce que soient balayés tous les pixels associés à l'élément de base graphique dans la pluralité de blocs.

3. Procédé selon la revendication 1, dans lequel la pluralité de blocs sont regroupés en bandes (n, n+1), chaque bande comportant chaque fois des blocs (a, a+1) disposés adjacents l'un à l'autre dans une direction perpendiculaire à une direction de balayage, à l'étape de balayage étant tout d'abord balayés les pixels associés à l'élément de base graphique des blocs (a, a+1) d'une première bande n et, ensuite, les pixels dans les blocs (b, b+1) d'autres bandes (n+1).

4. Procédé selon la revendication 3, dans lequel est déterminé, à l'étape de balayage après le balayage des blocs d'une bande, s'il est contenu, dans les blocs d'une bande adjacente (n+1), des pixels associés à l'élément de base graphique et, si tel est le cas, balayer la bande adjacente (n+1).

5. Procédé selon la revendication 3 ou 4, dans lequel est déterminée, pendant le balayage d'une bande, une position de départ pour le balayage de la bande suivante.

6. Procédé selon l'une des revendications 1 à 5, dans lequel les pixels associés à l'élément de base graphique sont balayés le long d'une ligne de balayage (124), le nombre de pixels dans la ligne de balayage n'excédant pas la largeur d'un bloc de mémoire, après le balayage de tous les pixels associés à l'élément de base graphique dans la ligne de balayage (124) étant balayés les pixels associés à l'élément de base graphique dans la ligne de balayage suivante.

7. Procédé selon la revendication 6, aux étapes suivantes consistant à :

    déterminer si un premier pixel (130a) disposé, dans la ligne de balayage, adjacent au pixel qui vient d'être balayé est associé à l'élément de base graphique ;
    déterminer si un second pixel (130b) disposé, dans la ligne de balayage suivante, adjacent au pixel qui vient d'être balayé est associé à l'élément de basé graphique ; et
    si ni le premier ni le second pixel (130a, 130b) n'est associé à l'élément de base graphique, balayer un autre pixel associé à l'élément de base graphique (130c) adjacent au premier pixel (130a) et adjacent au second pixel (130b).

104a
106a
104b
106b
Textur Maschine
RAM
Textur Maschine
RAM
102
Polygon Daten
Processor
Vertex Daten
116
Render Maschine
Render Maschine
Render Maschine
Render Maschine
108a
108d
RAM
RAM
RAM
RAM
110d
100
110a
108c
108b
110b
RAMDAC
110c
114
112

Fig. 1

n
130a
124
n+1
122
126
b
120
130b
a
130c
a+1
b+1
128

Fig. 2

E
E+de$_x$
E+de$_y$
E+(de$_x$+de$_y$)

Fig. 3

126
120
122
132
132
Cluster:
sichtbar
nicht sichtbar
128

Fig. 4

clx
1
2
cly
1
2

Fig. 5

132a
132a
122
Spalte = 0 1 2 3 4 5 6 7 8
124a
120
A)
132b
120
124a
0 1 2 3 4 5 6 7 8
122
132b
B)


Fig. 6

ilox=0
ilox=1
(0/0)
ilfx = 2
(7/7)
ilox=1
ilox=2
ilox=0
ilox=3
(0/0)
ilfx = 4
(7/7)
ilfx = 1, 2, 4, ...
ilfy = 1
cly = 1, 2, 4, ...
clx = 1(Render Maschine)
clx = 2(Textur Maschine)


Fig. 7

Start Werte
Deltas
Abtastrichtung
Cluster Form
Verschachtelungs-faktoren
Einschachtelungs-verschiebung
Start Wert Korrektur-Einheit
Kanten Interpolations-Einheit
Sichtbar-keits-bestimmungs einheit
Abtastbefehl
Sichtbarkeit
Überdeckung
136
138
140

Fig. 8

142
scnt -> 4 3 2 1 0 -1 -2
-2 -1 0 1 2 3 4 5 6 <- ccnt

Fig. 9

X
Y
Dir_X
Dir_Y
führendes Pixel

Fig. 10

| ccfx [ccfy] | | | | x_start mod clx [y_start mod cly] | | | |
|---|---|---|---|---|---|---|---|
| | | | | 0 | 1 | 2 | 3 |
| clx [cly] | 1 | dir_x [dir_y] | 0 | 0 | - | - | - |
| | | | 1 | 0 | - | - | - |
| | 2 | dir_x [dir_y] | 0 | 0 | -1 | - | - |
| | | | 1 | -1 | 0 | - | - |
| | 4 | dir_x [dir_y] | 0 | 0 | -1 | -2 | -3 |
| | | | 1 | -3 | -2 | -1 | 0 |
| | *n* | dir_x [dir_y] | 0 | ccfx = - (x_start mod clx)<br>ccfy = -(y_start mod cly) | | | |
| | | | 1 | ccfx = (x_start mod clx) - (clx -1)<br>ccfy = (y_start mod cly) - (cly -1) | | | |

**Fig. 11**

| icfx [icfy] | | dir_x = 0 [dir_y =0] | | | | dir_x = 1 [dir_y =1] | | | |
|---|---|---|---|---|---|---|---|---|---|
| | | (x_start/clx) mod ilfx = [(y_start/cly) mod ilfy =] | | | | (x_start/clx) mod ilfx = [(y_start/cly) mod ilfy =] | | | |
| | | 0 | 1 | 2 | 3 | 0 | 1 | 2 | 3 |
| ilox [iloy] | 0 | 0 | 3 | 2 | 1 | 0 | 1 | 2 | 3 |
| | 1 | 1 | 0 | 3 | 2 | 3 | 0 | 1 | 2 |
| | 2 | 2 | 1 | 0 | 3 | 2 | 3 | 0 | 1 |
| | 3 | 3 | 2 | 1 | 0 | 1 | 2 | 3 | 0 |
| | *n* | icfx=(ilox-((x_start/clx) mod ilfx)) mod ilfx<br>icfy=(iloy-((y_start/cly) mod ilfy)) mod ilfy | | | | icfx=(((x_start/clx) mod ilfx)-ilox) mod ilfx<br>icfy=(((y_start/cly) mod ilfy)-iloy) mod ilfy | | | |

**Fig. 12**

| Ausdruck | Definition |
|---|---|
| scfx | ccfx + clx * icfx, Start Korrektur-Faktor in x-Richtung |
| scfy | ccfy + cly * icfy, Start Korrektur-Faktor in y-Richtung |
| el_start' | el_start + scfx * el_dx + scfy * el_dy |
| en1_start' | en1_start + scfx * en1_dx + scfy * en1_dy |
| en2_start' | en2_start + scfx * en2_dx + scfy * en2_dy |
| x_start' | if dir_x = 0 then x_start' = x_start + scfx else x_start' = x_start - scfx |
| y_start' | if dir_y = 0 then y_start' = y_start + scfy else y_start' = y_start - scfy |
| ccnt_start' | ccnt_start - scfx |
| scnt_start' | scnt_start - scfy |

Fig. 13

el_start'
el_dx
el_dy
<<n
<<n
log2(ilfy * cly)
log2(ilfx * clx)
el_xy
el_y
el_dx
el
el_edge
el_strip
el_dx'
el_dy'
el_dxy
150
162
152
154
156
158
160

Fig. 14

172a
170b
174a
Dir_X
Dir_Y
Sensoren für sxn Berechnung:
174b
en + 2 dx
174
Sensor für syl
Berechung:
el +dx +2 dy
en +2 dx +dy
172b
174c
170a
170c
172
120


Fig. 15

| Ausdruck | Definition |
|---|---|
| ccnt_decr | ccnt - clx * ilfx |
| scnt_decr | scnt - cly * ilfy |
| (el_x, en1_x, en2_x) | (el, en1, en2) + clx * ilfx * (el_dx, en1_dx, en2_dx) |
| (el_y, en1_y, en2_y) | (el, en1, en2) + cly * ilfy * (el_dy, en1_dy, en2_dy) |
| (el_xy, en1_xy, en2_xy) | (el, en1, en2) + clx * ilf * (el_dx, en1_dx, en2_dx) + cly * ilfy * (el_dy, en1_dy, en2_dy) |
| syl | (el + (clx - 1) * el_dx + cly * ilfy * el_dy) >= 0 |
| ssc | scnt_decr >= 0 |
| sxn | ((en1 + clx * ilf * en1_dx ) >= 0 AND (en2 + clx * ilf * en2_dx) >= 0) **OR**<br>((en1 + clx * ilf * en1_dx + en1_dy) >= 0 **AND** (en2 + clx * ilf * en2_dx + en2_dy) >= 0) **OR**<br>... **OR**<br>((en1 + clx * ilf * en1_dx + (cly -1) * en1_dy) >= 0 **AND** (en2 + clx * ilf * en2_dx + (cly -1) * en2_dy) >= 0) |
| scc | ccnt_decr>= 0 |
| eos | if dir_x = 0 then eos = ((x div ilfx) mod stw >= stw - clx)<br>else eos = ((x div ilfx) mod stw < clx ) |

**Fig. 16**

| Bewegung | Name | Bedingung |
|---|---|---|
| x-Richtung | horz | (/eos AND sxn AND scc) OR ((eos AND /sf AND sxn AND scc) AND ((/ef AND /syl) OR /ssc)) |
| y-Richtung | vert | (eos OR /sxn OR /scc) AND ssc AND /ef AND syl |
| xy-Richtung | diag | /sxn AND ssc AND /ef AND /syl AND /sf AND scc |
| Kantenrückkehr | edge | (eos OR /sxn OR /scc) AND ssc AND ef |
| nächster Streifen | strip | (/ssc AND sf AND /sxn AND scc) OR ((eos OR / sxn) AND /ef AND /syl AND sf AND scc) OR (eos AND sf AND /ssc & scc) |
| nächstes Grund-element | newp | (/ssc AND /sf AND /(sxn AND scc)) OR (/scc AND /syl & /ef) OR (/scc AND /ssc) |

Fig. 17

| Register | zu ladender Wert | Bedingung |
|---|---|---|
| (el, en1, en2) | (el_x, en1_x, en2_x) | horz |
| | (el_y, en1_y, en2_y) | vert |
| | (el_xy, en1_xy, en2_xy) | diag |
| | (el_edge, en1_edge, en2_edge) | edge |
| | (el_strip, en1_strip, en2_strip) | strip |
| | (el_start, en1_start, en2_start) | newp |
| (el_edge, en1_edge, en2_edge) | (el_y, en1_y, en2_y) | horz AND syl AND /ef |
| (el_strip, en1_strip, en2_strip) | (el_x, en1_x, en2_x) | (vert OR edge) AND sxn AND scc AND /sf |
| ccnt | ccnt_decr | horz OR diag |
| | ccnt_edge | edge |
| | ccnt_strip | strip |
| | ccnt_start | newp |
| ccnt_edge | ccnt | horz AND syl AND /ef |
| ccnt_strip | ccnt_decr | (vert OR edge) AND sxn AND scc AND /sf |
| scnt | scnt_decr | vert OR edge OR diag |
| | scnt_strip + scnt | strip |
| | scnt_start | newp |
| scnt_strip | 1 | (vert OR edge) AND sxn & scc AND /sf |
| | scnt_strip + 1 | (vert OR edge) AND sxn AND scc AND sf |
| ef | 1 | syl AND horz |
| | 0 | /(syl AND horz) |
| sf | 1 | (vert OR edge) AND sxn AND scc |
| | 0 | strip OR newp OR diag |

**Fig. 18**

| Abtastbefehl | Bedingung | Kommentar |
|---|---|---|
| track_x | horz AND /ef | gehe zum nächsten Pixel in der Abtastlinie, verfolge Kantenrückkehrposition |
| inc_x | horz AND ef | gehe zum nächsten Pixel in der Abtastlinie, sichere Kantenrückkehrposition. |
| track_y | (vert OR edge) AND /sf | gehe zu Kanteneintrittsposition, verfolge Streifeneintrittsposition |
| inc_y | (vert OR edge) AND sf | gehe zur Kanteneintrittsposition, sichere Streifeneintrittsposition |
| track_xy | diag | gehe diagonal, sichere keine Rückkehrposition |
| jump | strip | gehe zum Streifeneintrittspunkt |
| load | newp | gehe zum nächsten Grundelement |

**Fig. 19**

vis(cofs,rofs) = (el+cofs*el_dx + rofs*el_dy) > = 0 AND
(en1 + cofs*en1_dx + rofs*en1_dy) > = 0 AND
(en2 + cofs*en2_dx + rofs*en2_dy) > = 0 AND
(ccnt - cofs)> 0 AND (scnt - rofs) > = 0

**A)**

X
Y
(cofs / rofs)
(0/0)
führendes Pixel
dir_x
dir_y
(0/0)
(1/0)
(0/1)
(1/1)
dir_x
dir_y
(1/0)
(0/0)
(1/1)
(0/1)
dir_y
(0/1)
(1/1)
(0/0)
(1/0)
dir_x
(1/1)
(0/1)
(1/0)
(0/0)
dir_y
dir_x

**B)**

**Fig. 20**

12
Maschine#0
Maschine#1
10
Maschine#2
Maschine#3
A)
12
#0 #1 #0 #1 #0 #1 #0 #1
#2 #3 #2 #3 #2 #3 #2 #3
#0 #1 #0 #1 #0 #1 #0 #1
#2 #3 #2 #3 #2 #3 #2 #3
#0 #1 #0 #1 #0 #1 #0 #1
#2 #3 #2 #3 #2 #3 #2 #3
10
#0 #1 #0 #1 #0 #1 #0 #1
#2 #3 #2 #3 #2 #3 #2 #3
B)

Fig. 21

Polygon Daten
Abtast-umwand-lung
16
Interpolator Befehle
Parameter Interpolation
18
Pixel Pipe-line
20
26
Entpacken
Packen
22
Speicher-Teilsystem
24
14

Fig. 22

Polygon
Daten
Parallele
Abtastum-
wandlung
16
Interpolator
Befehle
Parallele Parameter
Interpolation
18
20a
Pixel
Pipe-
line
#0
...
Pixel
Pipe-
line
#n
20n
28
26
Entpacken
Packen
22
Speicher-Teilsystem
24

Fig. 23

Y
X
30
$R(x_r,y_r)$
$(x_1,y_1)$
$P(x_p,y_p)$
$Q(x_q,y_q)$
$(x_0,y_0)$
$E(x,y) = (x-x_0)(y_1-y_0) - (y-y_0)(x_1-x_0)$
$E(x_p,y_p) = 0$
$E(x_q,y_q) > 0$
$E(x_r,y_r) < 0$

Fig. 24

E

E+de$_x$

E+de$_y$

$$E(x+1,y) = E(x,y) + de_x \qquad de_x = (y_1 - y_0)$$
$$E(x,y+1) = E(x,y) + de_y \qquad de_y = -(x_1 - x_0)$$

Fig. 25

32
30b
12
30a
30c
A)
34
32
12
30b
30a
30c
36
B)

Fig. 26

X
Y
Type A
Type B
Type C
Type D

Fig. 27

x
y
Streifen
Basis
16 Linien
Block (Bank 1)
Block (Bank 0)
32 Pixels (jeweils 32)

Fig. 28